# EUROPÄISCHE PATENTSCHRIFT

(11) **EP 1 377 364 B1**
(45) Veröffentlichungstag und Bekanntmachung des Hinweises auf die Patenterteilung: **05.05.2010**
(21) Anmeldenummer: 02716842.6
(22) Anmeldetag: 22.03.2002
(51) Int. Cl.: B01F 13/00, B01J 19/00, B01F 11/02, H03H 3/08, H03H 9/25, B01L 3/00

(54) **MISCHVORRICHTUNG UND MISCHVERFAHREN FÜR DIE DURCHMISCHUNG KLEINER FLÜSSIGKEITSMENGEN**
MIXING DEVICE AND MIXING METHOD FOR MIXING SMALL AMOUNTS OF LIQUID
DISPOSITIF ET PROCEDE DE MELANGE SERVANT A MELANGER INTIMEMENT DE FAIBLES QUANTITES DE LIQUIDE

(30) Priorität: 09.04.2001 DE 10117772
(43) Veröffentlichungstag der Anmeldung: 07.01.2004
(73) Patentinhaber: Beckman Coulter, Inc., Fullerton, California 92834 (US)
(72) Erfinder: WIXFORTH, Achim, 80636 München (DE); GAUER, Christoph, 81667 München (DE)
(74) Vertreter: Müller-Boré & Partner Patentanwälte
(86) Internationale Anmeldenummer: PCT/EP2002/003257
(87) Internationale Veröffentlichungsnummer: WO 2002/081070

(56) Entgegenhaltungen:
- WO-A-01/21291
- DE-A- 10 055 318
- US-A- 5 006 749
- US-A- 5 674 742
- PATENT ABSTRACTS OF JAPAN vol. 0134, no. 59 (E-832), 17. Oktober 1989 (1989-10-17) & JP 01 177707 A (NIPPON SEIKI CO LTD), 14. Juli 1989 (1989-07-14)

## Beschreibung

Die Erfindung betrifft ein Mischverfahren, eine Mischvorrichtung zum Durchmischen zumindest einer kleinen Flüssigkeitsmenge, eine Verwendung der Vorrichtung und ein Analyseverfahren für Bindungsstärken an Oberflächen.

Der Begriff Flüssigkeit umfaßt dabei unter anderem reine Flüssigkeiten, Mischungen, Dispersionen und Suspensionen, sowie Flüssigkeiten, in denen sich feste Teilchen, z. B. biologisches Material, befinden.

In der Mikroanalytik müssen kleine Flüssigkeitsmengen gemischt bzw. durchmischt werden. R.M. Moroney et al. beschreiben in Appl. Phys. Letters 59, Seiten 774ff. (1991) das Mischen von Flüssigkeit in einer 250 µm tiefen Kavität unter Einsatz einer Ultraschall-Lambwelle, die sich in einer dünnen flexiblen Membran ausbreitet, die die Kavität auf einer Seite abschließt.

Speziell für die in jüngster Zeit im Blickpunkt stehende "Lab-on-a-chip"-Technologie wären Mischprozesse für kleinste Flüssigkeitsmengen wünschenswert, die auf einem Chip durchgeführt werden können (siehe z.B. die US-A-5 674 742). Die Größenordnung der Flüssigkeitsmengen ist dabei im Bereich von Piko- bis Millilitern. Die relevanten Flächen auf dem Chip sind im Millimeter-, Mikrometer- oder Submikrometerbereich.

Der Mischprozeß kleiner Flüssigkeitsmengen ist im wesentlichen diffusionsgetrieben. Da die typischen Reaktionszeiten vieler chemischer oder biologischer Prozesse sehr kurz sind, wird die für einen chemischen/biologischen Prozeß auf dem Chip benötigte Zeit im wesentlichen durch die Zeit des Mischens der Reaktanden bestimmt.

Zur Beschleunigung der Mischung schlagen James B. Knight et al. in "Physical Review Letters" 1998, Seiten 3863ff. vor, eine Flüssigkeitsmenge mit hoher Geschwindigkeit auf einem Chip in einem 10 µm tiefen Kanal durch eine Engstelle in eine Pufferlösung zu treiben. Bei einem so erzeugten dünnen Flüssigkeitsjet wird die Mischung beschleunigt.

Auch im Grenzbereich eines solchen laminaren Flüssigkeitsstrahles findet die Vermischung jedoch immer noch durch Diffusion statt.

Zudem ist es wünschenswert, wenn sich auf schnelle Weise homogene Reaktionsbedingungen, z. B. Konzentration und Temperatur, innerhalb einer Flüssigkeitsmenge erzeugen lassen. Auch dies kann durch Mischen erreicht werden.

Die Druckschrift WO 01/994017 A1, die nach dem Prioritätstag des vorliegenden Textes veröffentlicht wurde und die insofern Stand der Technik nach Artikel 54(3) EPÜ darstellt, beschreibt ein Verfahren zur Bewegung einer kleinen Flüssigkeitsmenge, bei dem mindestens eine Flüssigkeitsmenge auf eine Festkörperoberfläche gebracht wird und zumindest eine Oberflächenschallwelle mit der mindestens einen Flüssigkeitsmenge in Wechselwirkung gebracht wird.

Aufgabe der vorliegenden Erfindung ist es, ein Verfahren und eine Vorrichtung anzugeben, mit welchen das Mischen einer oder mehrerer kleiner Flüssigkeitsmengen einfach, kostengünstig und effektiv auf kleinstem Raum, zum Beispiel auf einem Chip, durchgeführt warden kann.

Diese Aufgabe wird mit einem Verfahren mit den Merkmalen des Anspruches 1 und einer Vorrichtung mit den Merkmalen des Anspruches 16 gelöst. Die jeweiligen Unteransprüche betreffen vorteilhafte Ausgestaltungen. Ein Analyseverfahren zur Untersuchung der Bindungsstärke an Oberflächen unter vorteilhaftem Einsatz des erfindungsgemäßen Verfahrens bzw. eine vorteilhafte Verwendung der erfindungsgemäßen Vorrichtung sind Gegenstand der Ansprüche 40 bzw. 39.

Bei dem erfindungsgemäßen Mischverfahren wird eine oder mehrere kleine Flüssigkeitsmengen in einen Wechselwirkungsbereich einer Festkörperoberfläche, z. B. einen Chip, gebracht. Dort wird sie mit zumindest einer Oberflächenschallwelle zur Durchmischung in Wechselwirkung gebracht.

Die Größe des Wechselwirkungsbereiches ist im Millimeter-, Mikrometer- oder Submikrometerbereich. Die Menge der Flüssigkeit wird an diese Größe angepaßt.

Die Flüssigkeitsmenge und der Schallpfad können sich zur maximalen Wechselwirkung vollständig überdecken. Eine teilweise Überdeckung ermöglicht die Erzeugung zusätzlicher Turbulenzen.

Die Oberflächenschallwelle überträgt einen impuls auf die Flüssigkeitsmenge. Dieser impulsübertrag wird entweder durch die mechanische Deformierung der Festkörperoberfläche durch die Oberflächenschallwelle und/oder durch die elektrischen Felder erzielt, die bei Einsatz von piezoelektrischen Substraten die mechanische Deformation begleiten.

Durch den impulsübertrag und durch die von der Oberflächenspannung der Flüssigkeit vermittelte rückstellende Kraft wird in der Flüssigkeit eine erhebliche turbulente Strömung ausgelöst, die chemische Reaktionen deutlich schneller ablaufen läßt als im rein diffusiven Fall.

Besondere Vorteile des impulsübertrages mittels Obertlächenschallwellen zur Manipulation kleiner Materiemengen sind:
1. Die Stärke der Kraftwirkung auf die kleine Flüssigkeitsmenge läßt sich in einem weiten Bereich über die Amplitude der Oberflächenwelle einstellen.
2. Es lassen sich auf einfache Weise verschiedene zeitliche Verläufe der Kraft, wie z. B. Pulse verschiedener Länge, elektronisch definieren.
3. Die Beschallung der Festkörperoberfläche mit der Oberflächenwelle bewirkt eine automatische Reinigung der überstrichenen Bereiche.
4. Eine Ansteuerung über entsprechende Software ist einfach möglich.

Die Oberflächenschallwelle kann mit Hilfe einer Obertlächenwellenerzeugungseinrichtung erzeugt werden, Besonders effizient ist das Mischen, weil sich die Oberflächenwellenerzeugungseinrichtung zumindest teilweise direkt in dem Bereich befindet, auf den die Flüssigkeit gebracht wird. Durch die entsprechende Deformation der Oberfläche bzw. die Kraftwirkung durch die die Deformation begleitenden elektrischen Felder läßt sich so direkt und effektiv die Flüssigkeit mischen.

Bei einer Ausgestaltung des erfindungsgemäßen Verfahrens wird die Flüssigkeitsmenge bzw. werden die Flüssigkeitsmengen in eine Vertiefung der Festkörperoberfläche eingebracht, die klein gegenüber der Wellenlänge der Oberflächenwelle ist. Eine solche Vertiefung ermöglicht die genaue Lokalisation der Flüssigkeitsmenge auf der Festkörperoberfläche.

Bei einer anderen Ausgestaltung des erfindungsgemäßen Verfahrens wird die Flüssigkeit in einen Bereich der Oberfläche gebracht, dessen Benetzungseigenschaften sich von seiner lateralen Umgebung derart unterscheiden, daß sich die Flüssigkeit bevorzugt darauf aufhält. Bei einer solchen Ausgestaltung ist es nicht notwendig, die Flüssigkeit in eine Vertiefung zu bringen. Auf dem Oberflächenbereich mit den von seiner lateralen Umgebung unterschiedlichen Benetzungseigenschaften wird die Flüssigkeitsmenge aufgrund ihrer Oberflächenspannung gehalten. Die Flüssigkeit befindet sich auf diesem bevorzugten Aufenthaltsbereich z. B. in Form eines Tröpfchens. Dabei ist es besonders vorteilhaft, daß trotz des eingegrenzten Aufenthaltsbereiches der Flüssigkeit, der durch die Modulation der Benetzungseigenschaften erreicht wird, keinerlei Gräben, Ecken oder Kanten notwendig sind, die den Mischprozeß zumindest lokal beeinflussen könnten. Durch die im wesentlichen planare Oberfläche ist sowohl das Aufbringen als auch das Entfernen der Flüssigkeit vor bzw. nach dem Prozeß stark vereinfacht. Auch eine Reinigung der Oberfläche ist einfacher durchzuführen als im Falle einer Vertiefung.

Ohne Einwirkung einer zu großen äußeren Kraft wird die Flüssigkeitsmenge die Vertiefung bzw. den bevorzugten Aufenthaltsbereich aufgrund ihrer Oberflächenspannung nicht verlassen. Erst bei Einwirkung einer ausreichend großen Kraft wird die Flüssigkeit aus dem Bereich weggetrieben. Bei dem erfindungsgemäßen Verfahren kann also zunächst mit einer geringen intensität der Oberflächenschallwelle eine Durchmischung der Flüssigkeit auf dem bevorzugten Aufenthaltsbereich erreicht werden. Soll die Flüssigkeit dann diesen Bereich verlassen, kann die Intensität der Oberflächenschallwelle so lange erhöht werden, bis die Flüssigkeit den bevorzugten Aufenthaltsbereich verläßt.

Die Oberflächenschallwelle läßt sich auf piezoelektrischen Substraten oder Substraten mit piezoelektrischen Bereichen, z. B. piezoelektrischen Beschichtungen, erzeugen. Dabei ist es ausreichend, wenn das Substrat bzw. die entsprechende Beschichtung nur in dem Bereich vorliegt, in dem sich die Oberflächenwellenerzeugungseinrichtung befindet.

Die Oberflächenwelle kann kontinuierlich eingestrahlt werden, um den Mischprozeß zu fördern. Besonders effektiv ist es jedoch, wenn die Oberflächenschallwelle gepulst eingestrahlt wird.

Wird zusätzlich die Pulsfrequenz der Oberflächenschallwelle derart gewählt, daß sie gleich einer Eigenfrequenz einer kleinen Flüssigkeitsmenge ist, die sich auf dem bevorzugten Aufenthaltsbereich bzw. in der Vertiefung befindet, kommt es zu einer Resonanzüberhöhung, die das Mischen noch weiter verstärkt. Die dazu geeignete Pulsfrequenz richtet sich nach der Flüssigkeitsmenge bzw. ihrem Volumen und ihrer Oberflächenspannung und beträgt typischerweise einige Hz bis einige kHz.

Die Oberflächenschallwelle kann z. B. so eingestrahlt werden, daß die Flüssigkeitsmenge von ihr gleichmäßig beschallt wird. Unterhalb der Flüssigkeitsmenge verformt sich durch die durchlaufende Oberflächenschallwelle die Festkörperoberfläche und bildet so eine mechanische Deformation. Diese mechanische Deformation oder die sie begleitenden elektrischen Felder wirken auf die Flüssigkeitsmenge im Grenzbereich zwischen der Flüssigkeitsmenge und der Festkörperoberfläche. Die laufende Oberflächenwelle bewegt dabei den unteren Teil der Flüssigkeitsmenge mit. Aufgrund der Oberflächenspannung wird bei ausreichend geringer Intensität der Oberflächenschallwelle die Flüssigkeitsmenge dennoch den bevorzugten Aufenthaltsbereich bzw. die Vertiefung nicht verlassen. Um einen Volumenausgleich innerhalb der Flüssigkeitsmenge zu schaffen, wird sich im oberen Bereich der Flüssigkeitsmenge, der von der Festkörperoberfläche entfernt ist, eine Gegenströmung bilden. Auf diese Weise wird eine Bewegung in der Flüssigkeitsmenge erzeugt und eine Durchmischung erreicht.

Bei einer anderen Ausführungsform wird die Oberflächenschallwelle dezentral auf die Flüssigkeitsmenge geschickt. Die Flüssigkeitsmenge wird dann nur in einem Teilbereich getroffen und beginnt z. B. sich zu drehen.

Ein ähnlicher Effekt läßt sich erreichen, wenn die Oberflächenschallwelle von einer Oberflächenwellenerzeugungseinrichtung generiert wird, die sich in dem bevorzugten Aufenthaltsbereich bzw. in der Vertiefung, jedoch nicht symmetrisch dazu, befindet.

Bei einer anderen Ausgestaltung des erfindungsgemäßen Verfahrens werden zumindest zwei Oberflächenschallwellen auf die Flüssigkeitsmenge geschickt, die im Bereich der Flüssigkeitsmenge zueinander phasenverschoben sind. Zum Beispiel können zwei parallele Oberflächenschallwellen mit einer Phasenverschiebung von einer halben Wellenlänge auf die Flüssigkeitsmenge geschickt werden. Der Impulsübertrag, der durch die "Wellenberge" der Oberflächenschallwelle auf die Flüssigkeitsmenge übertragen wird, ist dann ebenfalls phasenverschoben, so daß es zu der Ausbildung von Vortizes in der Flüssigkeitsmenge kommt, die eine sehr effektive Durchmischung bewirken.

Die Phasenverschiebung läßt sich erreichen, indem zwei parallel angeordnete Oberflächenwellenerzeugungseinrichtungen mit einer entsprechend phasenverschobenen Frequenz angesteuert werden. Ebenso können die Oberflächenwellenerzeugungseinrichtungen einen unterschiedlichen Abstand von dem Wechselwirkungsbereich haben, der nicht dem ganzzahligen Vielfachen einer Wellenlänge entspricht.

Bei eine in weiteren vorteilhaften erfindungsgemäßen Verfahren wird die Flüssigkeit in einen Oberflächenbereich gebracht, in dem sich ein Resonator für eine Oberflächenschallwelle befindet, die z. B. mit einer beabstandeten Oberflächenschallwellenerzeugungseinrichtung erzeugt wird. Ein solcher Resonator kann z. B. durch eine periodisch geätzte Struktur oder periodisch aufgebrachte Beschichtungen, vorzugsweise aus Metall, erzeugt werden. Eine Oberflächenschallwelle, die in diesen Bereich läuft, wird durch den Resonator lokal überhöht, um so den Mischvorgang in der Flüssigkeit zu fördern.

Zur effektiven Erzeugung von Turbulenzen können in dem bevorzugten Aufenthaltsbereich bzw. in der Vertiefung, in dem sich die Flüssigkeit bei der Durchführung des erfindungsgemäßen Verfahrens befindet, Störelemente eingebracht sein, die die Bildung von Turbulenzen fördern.

Zur Erzeugung der Oberflächenwelle wird bei einer vorteilhaften Ausgestaltung ein an sich bekannter interdigitaltransducer eingesetzt. Ein solcher interdigitaltransducer hat z. B. zwei Elektroden, die fingerartig z. B. im Abstand einiger µm ineinander greifen. Durch Anlegen eines hochfrequenten Wechselfeldes, z. B. in der Größenordnung von einigen MHz bis einigen 100 MHz, wird in einem piezoelektrischen Substrat bzw. in einem piezoelektrischen Bereich des Substrates eine Oberflächenschallwelle angeregt, wenn die Resonanzbedingung zumindest nahezu erfüllt ist, daß die Frequenz gleich dem Quotienten aus der Oberflächenschallgeschwindigkeit und dem Fingerabstand einer Elektrode ist. Die Ausbreitungsrichtung ist senkrecht zu den ineinander greifenden Fingerelektrodenstrukturen. Selbstverständlich können auch andere interdigitaltransducergeometrien, wie sie aus der Technologie der Oberflächenwellenfilter bekannt sind, eingesetzt werden. Mit Hilfe eines interdigitaltransducers läßt sich auf sehr einfache Weise eine sehr definierte Oberflächenschallwelle erzeugen. Die Herstellung eines interdigitaltransducers ist mit bekannten lithographischen Verfahren und Beschichtungstechnologien kostengünstig und einfach. Interdigitaltransducer können zudem, z. B. durch Einstrahlung eines elektromagnetischen Wechselfeldes in eine mit dem interdigitaltransducer verbundene Antenneneinrichtung, drahtlos angesteuert werden.

Das erfindungsgemäße Verfahren eignet sich zur Durchmischung einer Flüssigkeitsmenge, um darin z. B. eine Reaktion zu fördern und/oder homogene Bedingungen herzustellen. Der Begriff "Mischen" soll also auch eine Durchmischung im Sinne eines Rührprozesses umfassen. Ebenso kann das erfindungsgemäße Verfahren dazu eingesetzt werden, zwei oder mehrere Flüssigkeiten miteinander zu mischen. Auch in diesem Fall ist die Geschwindigkeit des Mischens bzw. der Reaktion nicht durch die Diffusion begrenzt.

Das erfindungsgemäße Verfahren kann ebenso vorteilhaft eingesetzt werden, um Feststoffe, wie z. B. ein pulverförmiges Material in einer Flüssigkeit zu lösen. Das Pulver wird zunächst auf den Wechselwirkungsbereich der Festkörperoberfläche gebracht. Im Anschluß wird eine Flüssigkeit aufgebracht und mit Hilfe der Oberflächenschallwelle eine turbulente Bewegung erzeugt. So wird das Auflösen des pulverförmigen Materials beschleunigt und eine Durchmischung findet sehr schnell statt.

Eine weitere vorteilhafte Ausgestaltung des Verfahrens sieht vor, daß während des Durchmischungsprozeßes zusätzlich zumindest lokal geheizt wird, um den Mischprozeß und die Erzeugung der turbulenten Strömung weiter zu verstärken.

Die erfindungsgemäße Mischvorrichtung zur Durchführung eines erfindungsgemäßen Verfahrens umfaßt mindestens einen Wechselwirkungsbereich auf einer Festkörperoberfläche und wenigstens eine Oberflächenwellenerzeugungseinrichtung, die zu dem Wechselwirkungsbereich derart angeordnet ist, daß Energie einer mit ihr generierten Oberflächenschallwelle auf eine Flüssigkeitsmenge übertragen wird, die sich in dem Wechselwirkungsbereich befindet.

Mit dem Begriff Festkörperoberfläche ist im Rahmen des erfindungsgemäßen Gegenstandes entweder direkt die Oberfläche eines Festkörpers, z. B. eines Chips, wie er aus der Halbleitertechnologie bekannt ist, gemeint oder eine Beschichtung auf einer Festkörperoberfläche, z. B. eine Metallbeschichtung oder eine isolationsbeschichtung. Ebenso soll z. B. eine Quarzschicht auf einem Festkörper als Festkörperoberfläche verstanden werden. Ebenso umfaßt die Erfindung Ausführungsformen, bei denen ein Teil einer Festkörperoberfläche, z. B. eines piezoelektrischen Lithiumniobatkristalles, mit einer Beschichtung versehen ist, z. B. Quarz.

Bei einer Ausgestaltung der erfindungsgemäßen Vorrichtung ist eine Vertiefung auf der Festkörperoberfläche vorgesehen. Eine Oberflächenwellenerzeugungseinrichtung ist auf der Festkörperoberfläche derart angeordnet, daß sie eine Oberflächenschallwelle erzeugen kann, die mit einer Flüssigkeit in der Vertiefung in Wechselwirkung treten kann. Die laterale Ausdehnung der Vertiefung bestimmt sich nach den zu manipulierenden Mengen. Typische Maße sind hier einige Mikrometer bis Millimeter.

Ist die Oberflächenwellenerzeugungseinrichtung außerhalb der Vertiefung angeordnet, so sollte die Vertiefung klein gegenüber der Wellenlänge sein, die mit der Oberflächenwellenerzeugungseinrichtung generiert werden kann. Typischerweise sind dies einige Mikrometer. Bei einer tieferen Vertiefung würde eine Oberflächenwelle, die von einer Oberflächenwellenerzeugungseinrichtung außerhalb der Vertiefung erzeugt wird, die Stufe zum Eintritt in die Vertiefung nicht überwinden können.

Bei einer anderen erfindungsgemäßen Ausgestaltung ist die Oberflächenwellenerzeugungseinrichtung innerhalb des Bereiches der Vertiefung selbst vorgesehen, so daß keine Begrenzung für die Tiefe der Oberflächenwellenerzeugungseinrichtung notwendig ist. Eine solche Anordnung ermöglicht auch die effektive Durchmischung einer Flüssigkeit innerhalb der Vertiefung, da die Oberflächenwelle direkt mit der Flüssigkeitsmenge wechselwirken kann.

Gegebenenfalls wird die Oberflächenschallwellenerzeugungseinrichtung mit einer Beschichtung versehen, falls das Material der Oberflächenwellenerzeugungseinrichtung für die zu untersuchende Flüssigkeit bzw. das darin befindliche Material schädlich sein könnte. Diese Beschichtung ist dabei so gewählt, daß die Oberflächenschallwelle dennoch auf die Flüssigkeit wirken kann. Die Dicke der Beschichtung im Wechselwirkungsbereich muß dazu kleiner als die Oberflächenschallwellenlänge sein.

Bei einer anderen Ausgestaltung der erfindungsgemäßen Vorrichtung ist im Bereich der Oberflächenwellenerzeugungseinrichtung die Oberflächenbeschaffenheit der Festkörperoberfläche derart gewählt, daß die Benetzungseigenschaften dieses Bereiches sich derart von der lateralen Umgebung unterscheiden, daß sich die Flüssigkeitsmenge bevorzugt darauf aufhält. Auch bei einer solchen erfindungsgemäßen Ausgestaltung kann die Oberflächenschallwellenerzeugungseinrichtung im Bereich des bevorzugten Aufenthaltsbereiches angeordnet sein, um die Wechselwirkung zwischen der Oberflächenschallwelle und der Flüssigkeitsmenge auf dem bevorzugten Aufenthaltsbereich möglichst effektiv zu gestalten. In Abhängigkeit der Materialien der Oberflächenschallwellenerzeugungseinrichtung und einer möglichen Beschichtung für den bevorzugten Aufenthaltsbereich kann wiederum eine ausreichend dünne zusätzliche Schutzschicht zwischen diesen Elementen bzw. auf diesen Elementen vorgesehen sein, um die Flüssigkeit von diesen Elementen zu trennen.

Zur Modulation der Benetzungseigenschaften können z. B. hydrophile bzw. hydrophobe Bereiche eingesetzt werden. Sollen wäßrige Lösungen manipuliert werden, wird der bevorzugte Aufenthaltsbereich z. B. so gewählt, daß er hydrophiler ist als die umgebende Festkörperoberfläche. Dies kann entweder durch eine hydrophile Beschichtung des bevorzugten Aufenthaltsbereiches oder durch eine hydrophobe Umgebung erreicht werden. Eine hydrophobe Umgebung kann z. B. bei einer bevorzugten Ausgestaltung der Erfindung durch eine Silanisierung der Oberfläche realisiert werden.

Je nach Anwendung kann die den Aufenthaltsbereich umgebende Festkörperoberfläche auch hydrophil, lipophob oder lipophil im Vergleich zur Oberfläche des Aufenthaltsbereiches gewählt werden. Zur Manipulation von nichtwäßrigen Lösungen kann es z. B. vorteilhaft sein, wenn der bevorzugte Aufenthaltsbereich lipophil im Vergleich zur Umgebung ist.

Die Modulation der Benetzungseigenschaften kann z. B. durch eine entsprechende Beschichtung erreicht werden.

Die Definition des bevorzugten Aufenthaltsbereiches, in dem die Flüssigkeit stärker benetzt wird als in seiner Umgebung, kann auch durch eine flache Ätzung der Oberfläche in diesem Bereich erfolgen bzw. unterstützt werden, wobei die Ätztiefe klein gegenüber der lateralen Ausdehnung des bevorzugten Aufenthaltsbereiches, z. B. ein Zehntel seiner lateralen Ausdehnung, ist. So läßt sich z. B. im Falle einer wäßrigen Lösung der bevorzugte Aufenthaltsbereich dadurch definieren, daß die den bevorzugten Aufenthaltsbereich umgebende Oberfläche hydrophob beschichtet wird und im Bereich des Aufenthaltsbereiches selbst einige Nanometer bis einige Mikrometer in die Oberfläche geätzt wird. Auf diese Weise ist der Kontrast bezüglich des Benetzungswinkels erhöht. Dennoch ist die Oberfläche makroskopisch im wesentlichen planar. Eine derartig fläche Ätzung ist zudem fertigungstechnisch sehr einfach und definiert herstellbar, ohne daß die bekannten Probleme einer tiefen Ätzung auftreten. Die Benetzungseigenschaften können weiterhin durch Mikrostrukturierung moduliert werden, wie es beim sogenannten Lotuseffekt der Fall ist, der auf der unterschiedlichen Rauhigkeit der Oberfläche beruht. Diese kann z. B. durch Mikrostrukturierung der entsprechenden Oberflächenbereiche erhalten werden, z. B. durch chemische Behandlung oder lonenbestahlung. Die Herstellung von Bereichen unterschiedlicher Benetzungseigenschaften ist mit Hilfe bereits bekannter lithographischer Verfahren und Beschichtungstechnologien also einfach und kostengünstig durchzuführen.

Die Oberflächenwellenerzeugungseinrichtung kann sich auf dem Bereich mit modulierten Benetzungseigenschaften bzw. auf der Oberfläche der Vertiefung befinden. Besonders vorteilhaft ist es, wenn eine Beschichtung oberhalb der Oberflächenwellenerzeugungseinrichtung vorgesehen ist, die z. B. biokompatibel ist. Mit Hilfe einer solchen Beschichtung kann verhindert werden, daß das Material der Oberflächenwellenerzeugungseinrichtung Einfluß auf die Flüssigkeit nehmen kann bzw. die Flüssigkeit die Oberflächenwellenerzeugungseinrichtung beschädigen kann, wenn es sich z. B. um ätzende Flüssigkeiten handelt.

Bei Wahl einer biokompatiblen Beschichtung können z. B. biologische Materialien in einer Pufferlösung untersucht werden, ohne daß eine Beeinträchtigung bzw. Beschädigung des Materials droht oder die Reaktionsbedingungen negativ beeinflußt würden. Ein mögliches Material für eine biokompatible Beschichtung ist z. B. Siliziumdioxid.

Dabei kann auch eine biokompatible Beschichtung, z. B. aus Siliziumdioxid, auf der Festkörperoberfläche vorgesehen sein, in die eine Vertiefung geätzt ist, die die Flüssigkeit aufnehmen soll. Die Oberflächenschallwellenerzeugungseinrichtung kann in einem Bereich der Oberfläche angeordnet sein, auf dem sich kein Siliziumdioxid befindet. Die Oberflächenschallwelle breitet sich von der Oberflächenschallwellenerzeugungseinrichtung auf der Festkörperoberfläche auch in dem Bereich aus, in dem sich die Siliziumdioxidschicht befindet. Eine solche Siliziumdioxidschicht läßt sich sehr leicht ätzen, um eine definierte Vertiefung zu erzeugen. Damit die Oberflächenschallwelle mit der Flüssigkeitsmenge in der Vertiefung wechselwirken kann, sollte die Dicke der biokompatiblen Beschichtung im Bereich der Vertiefung klein gegen die Wellenlänge der Oberflächenschallwelle sein.

Besonders einfach ist es, wenn die Beschichtung so gewählt ist, daß sie auch Benetzungseigenschaften aufweist, die sich derart von der lateralen Umgebung unterscheiden, daß sich die Flüssigkeit bevorzugt darauf aufhält.

Bei einer vorteilhaften Weiterbildung der erfindungsgemäßen Mischvorrichtung sind in dem Wechselwirkungsbereich Störelemente vorgesehen. Bei einer Ausgestaltung mit einem bevorzugten Aufenthaltsbereich können diese Störelemente z. B. in einer unregelmäßigen Begrenzung dieses Aufenthaltsbereiches bestehen. Eine Flüssigkeit, die sich auf dem Aufenthaltsbereich aufgrund der Einwirkung einer Oberflächenschallwelle bewegt, wird durch die Wechselwirkung mit dem unregelmäßigen Rand in Turbulenzen versetzt. Ein ähnlicher Effekt läßt sich durch eine unregelmäßige Vertiefung erzeugen.

Auch innerhalb des Wechselwirkungsbereiches können turbulenzerzeugende Störelemente vorgesehen sein. Bei einer Ausführungsform mit einer Vertiefung können diese Störelemente z. B. durch hochstehende Elemente erzeugt werden, die bei dem Ätzprozeß zur Erzeugung der Vertiefung ausgespart worden sind. Bei einer Ausführungsform mit einem bevorzugten Aufenthaltsbereich, der durch die unterschiedlichen Benetzungseigenschaften definiert ist, können solche Störelemente durch Bereiche innerhalb des bevorzugten Aufenthaltsbereiches definiert werden, die Benetzungseigenschaften haben, die derart gewählt sind, daß die Flüssigkeit mit der Oberfläche der Störelemente weniger gut benetzt als mit dem umgebenden bevorzugten Aufenthaltsbereich.

Eine einfache Ausführungsform der erfindungsgemäßen Vorrichtung umfaßt einen oder mehrere Interdigitaltransducer zur Erzeugung der Oberflächenschallwellen.

Um eine zusätzliche Erhitzung der zu mischenden Flüssigkeiten zu ermöglichen, kann im Bereich der Vertiefung bzw. in dem durch die Modulation der Benetzungseigenschaften definierten bevorzugten Aufenthaltsbereich eine Heizeinrichtung, z. B. eine Widerstandsheizung, vorgesehen sein.

Eine Resonanzüberhöhung kann erreicht werden, wenn sich innerhalb der Vertiefung bzw. des bevorzugten Aufenthaltsbereiches ein Resonator befindet, der so eingestellt ist, daß eine Oberflächenschallwelle, die mit der Oberflächenwellenerzeugungseinrichtung der erfindungsgemäßen Vorrichtung erzeugt wird, resoniert. Bei einer Ausführungsform mit einem interdigitaltransducer als Oberflächenschallwellenerzeugungseinrichtung kann ein solcher Resonator z. B. aus periodischen Metallstreifen bestehen, deren Abstand kommensurabel mit der Fingeranordnung des Interdigitaltransducers zur Erzeugung der Oberflächenwellen ist. Bei einer anderen Ausführungsform kann ein solcher Resonator z. B. geätzte Streifen oder andere Beschichtungen in der entsprechenden Geometrie aufweisen.

Im Speziellen für die Anwendung für leitfähige Flüssigkeitsmengen ist eine Beschichtung der Resonatoren und/oder Oberflächenwellenerzeugungseinrichtungen vorteilhaft. Befindet sich ein leitfähiges Medium in einem Abstand zur Oberflächenwellenerzeugungseinrichtung, der kleiner oder gleich der Wellenlänge der Oberflächenschallwellen, so werden die Elektroden der Oberflächenwellenerzeugungseinrichtung kapazitiv gekoppelt, wodurch die Effizienz, mit der die Oberflächenwellenerzeugungseinrichtung elektrische Energie in akustische Energie wandelt, und somit auch die Mischeffizienz vermindert. Versieht man die Oberflächenwellenerzeugungseinrichtung und/oder die Resonatoren mit einer isolierenden Schicht, kann die Mischeffizienz erhöht werden, da die evaneszenten elektrischen Felder exponentiell abfallen. Insbesondere ist eine Beschichtung mit einer hohen Dielektrizitätskonstante von Vorteil, da dann das elektrische Feld besonders schnell abfällt. Bei einer besonderen Ausgestaltung ist die Schicht so dünn gewählt, daß ihre Dicke kleiner oder in etwa gleich der Wellenlänge der mit der Oberflächenschallwellenerzeugungseinrichtung erzeugten Oberflächenschallwellen ist. Eine dickere Beschichtung würde die Oberflächenschallwelle mechanisch stark dämpfen und die Mischeffizienz wiederum verringern. Die Beschichtung kann organisch, z. B. aus Photolack, oder anorganisch, z. B. Siliziumdioxid oder Siliziumnitrid, sein. Die Beschichtung kann z. B. mit bekannten Verfahren wie Sputtern oder Spinnen aufgebracht werden. Für biologische Anwendungen sind die Schichten vorzugsweise wiederum biokompatibel. Weiterhin können die Beschichtungen lateral strukturiert werden.

Die erfindungsgemäße Vorrichtung kann Teil eines Gesamtsystems sein. Es können z. B. mehrere derartige "Mischkammern" auf einem einzelnen Festkörperchip vorgesehen sein, um mehrere Prozesse gleichzeitig durchführen zu können. Ebenso kann eine erfindungsgemäße Mischvorrichtung Teil eines komplexen Systems mit mehreren Analyse- bzw. Synthesevorrichtungen sein, die andere Analyse- bzw. Syntheseschritte ermöglichen. Auf einfache Weise läßt sich so ein "lab-on-a-chip" realisieren, auf dem mehrere unterschiedliche Prozesse durchgeführt werden können. Zur Erzeugung der Oberflächenschallwellen für eine Mischvorrichtung können eine oder mehrere Oberflächenwellenerzeugungseinrichtungen gleichzeitig vorgesehen sein, die z. B. mit verschiedener Intensität betrieben werden können.

Die Befüllung der erfindungsgemäßen Mischvorrichtung zur Durchführung des erfindungsgemäßen Verfahrens kann z. B. mit Hilfe eines Pipettierroboters geschehen. Ebenso kann vorgesehen sein, daß Kanäle oder Zuleitungen vorgesehen sind, die ähnlich dem bevorzugten Aufenthaltsbereiches Benetzungseigenschaften aufweisen,die sich von ihrer lateralen Umgebung derart unterscheiden, daß sich die Flüssigkeit bevorzugt darauf aufhält. Eine Flüssigkeitsmenge kann entlang einer solchen Zuleitung z. B. durch impulsübertrag einer Oberflächenschallwelle bewegt werden.

Die Erfindung ist nicht auf einzelne freie Festkörperoberflächen beschränkt. Ebenso kann die Erfindung in Anordnungen realisiert werden, bei denen sich zwei Festkörperoberflächen gegenüberstehen, zwischen denen sich eine Flüssigkeitsmenge befindet. Bei einer solchen Ausgestaltung kann sich die den Wechselwirkungsbereich definierende Vertiefung bzw. der den Wechselwirkungsbereich definierende bevorzugte Aufenthaltsbereich auf einer Oberfläche befinden und die Oberflächenerzeugungseinrichtung auf der gegenüberliegenden Oberfläche. Mit einer solchen Anordnung sind ebenso die erfindungsgemäßen vorteilhaften Effekte zu erreichen, wenn die kleine Flüssigkeitsmenge sich mit beiden Oberflächen in Berührung befindet. Bei einer solchen Anordnung können die Präparationsschritte zur Herstellung der Oberflächenwellenerzeugungseinrichtung und des bevorzugten Aufenthaltsbereiches bzw. der Vertiefung unabhängig voneinander durchgeführt werden, bevor die Oberflächen gegenüber voneinander angeordnet werden.

Ein erfindungsgemäßes Analyseverfahren zur Untersuchung der Bindungsstärke von Objekten ist Gegenstand des Anspruchs 40. Das oben beschriebene erfindungsgemäße Mischverfahren zum Durchmischen kleiner Flüssigkeitsmengen wird mit einer Lösung mit mikroskopisch kleinen Objekten eingesetzt. Während oder nach der Wechselwirkung dieser Lösung mit der Oberflächenschallwelle wird in Abhängigkeit der Strömung, die durch die Oberflächenschallwelle erzeugt wird, die Menge bzw. Zahl der an der Oberfläche haftenden Objekte untersucht bzw. gezählt. Das erfindungsgemäße Mischverfahren wird dabei also eingesetzt, um eine z. B. turbulente Strömung zu erzeugen.

Nachdem der Lösungstropfen auf der Oberfläche platziert worden ist, wo er durch seine Oberflächenspannung zusammengehalten wird, sinken die mikroskopisch kleinen Objekte auf die Oberfläche ab. Dort können sie entweder durch eine spezifische oder eine unspezifische Bindung bzw. Adhäsion haften. Der Lösungstropfen wird mit der Oberflächenschallwelle gemäß dem erfindungsgemäßen Mischverfahren in Bewegung versetzt. Je nach Strömungsgeschwindigkeit bzw. Stärke der Oberflächenschallwelle werden die an der Oberfläche befindlichen mikroskopisch kleinen Objekte mitgerissen und so entfernt. Wird die Menge der an der Oberfläche haftenden Objekte in Abhängigkeit der Strömungsgeschwindigkeit bzw. -stärke bestimmt, kann eine Aussage über die Bindungsstärke getroffen werden. Ein besonderer Vorteil der Verwendung von Oberflächenschallwellen ist es, daß die Amplitude bzw. die Strömungsgeschwindigkeit in weiten Bereichen eingestellt werden kann, insbesondere wenn Interdigitaltransducer zur Erzeugung der Oberflächenschallwellen eingesetzt werden.

Besonders vorteilhaft läßt sich dieses Verfahren einsetzen, wenn eine Nährlösung als Flüssigkeitsmenge eingesetzt wird und biologische Objekte, insbesondere Zellen oder Bakterien untersucht werden. Gegebenenfalls kann die Oberfläche insgesamt oder in Teilbereichen funktionalisiert werden, um die Bindungsstärke an verschieden funktionalisierten Flächen zu untersuchen.

Die Funktionalisierung kann z.B. zelluläre Monolagen oder eine Beschichtung mit Adhäsionsmolekülen umfassen. Die zelluläre Beschichtung kann z.B.aus endothelialen Zellen bestehen. Die Adhäsionsmoleküle können z.B. aus endothelialen Zellen isoliert werden oder extrazelluläre Matrixproteine wie Fibronektin sein.

Sind auf einer Oberfläche in verschiedenen Bereichen verschiedene Funktionalisierungen vorgesehen, so können parallel auf einer Oberfläche verschiedene Bindungen untersucht werden. Weiterhin können verschiedene lokale Strömungsmuster, z. B. durch verschiedene Transducer auf einem Chip realisiert werden, um z. B. unterschiedlich funktionalisierte Bereiche selektiv anzusteuern.

Eine besonders vorteilhafte Anwendung der Mischvorrichtung ergibt sich insofern für ein Zelladhäsionsassay, das zur Untersuchung der Bindung von Zellen an ggf. funktionalisierten Oberflächen dient. Da Zellen in einer Nährlösung absinken und unspezifisch an der Substratoberfläche adhärieren, ist es wichtig, spezifische Bindungen von unspezifischen unterscheiden zu können. Mit der erfindungsgemäßen Mischvorrichtung können die Zellen mit einer Oberflächenschallwelle angeströmt werden und wiederum untersucht werden, ob sich einzelne Zellen als Funktion der Strömungsgeschwindigkeit losreißen. Auf diese Weise läßt sich wie beschrieben die Bindungsstärke als Funktion der Strömungsgeschwindigkeit untersuchen.

Zellen mit Durchmessern von z. B. 10 bis 100 µm setzen der durch die Oberflächenschallwelle induzierten Strömung im Falle z.B. einer unspezifischen Bindung an der Oberfläche einen ausreichenden Widerstand entgegen, daß die Bindung zwischen Oberfläche und Objekt durch die Strömung aufgebrochen werden kann.

Die Erfindung wird anhand der beiliegenden Figuren im Detail erläutert. Die Figuren stellen dabei Schemazeichnungen dar, die nicht notwendigerweise maßstabsgetreu sind. Dabei zeigt:
- Figur 1a:: einen Ausschnitt einer Vorrichtung zur Durchführung eines Mischverfahrens, nicht gemäβ der Erfindung, in Draufsicht,
- Figur 1b:: eine seitliche Schnittansicht der Vorrichtung der Figur 1a,
- Figur 2a:: einen Ausschnitt einer Ausführungsform einer erfindungsgemäßen Vorrichtung zur Durchführung eines erfindungsgemäßen Verfahrens in Draufsicht,
- Figur 2b:: eine seitliche Schnittansicht der Ausführungsform der Figur 2a,
- Figur 3a:: einen Ausschnitt einer Zweiten Ausführungsform der erfindungsgemäßen Vorrichtung zur Durchführung eines erfindungsgemäßen Verfahrens in Draufsicht,
- Figur 3b:: eine seitliche Schnittansicht der Ausführungsform der Figur 3a,
- Figur 4:: einen Ausschnitt einer anderen Vorrichtung zur Durchführung eines Mischverfahrens, nicht gemäβ der Erfindung, in Draufsicht,
- Figur 5a:: einen Ausschnitt noch einer anderen Vorrichtung zur Durchführung eines Mischverfahrens, nicht gemäβ der Erfindung, in Draufsicht,
- Figur 5b:: eine Abwandlung des in Figur 5a dargestellten Verfahrens,
- Figur 6:: einen Ausschnitt einer dritten Ausführungsform der erfindungsgemäßen Vorrichtung zur Durchführung des erfindungsgemäßen Verfahrens in Draufsicht,
- Figur 7a:: einen Ausschnitt einer weiteren Vorrichtung zur Durchführung eines Mischverfahrens, nicht gemäβ der Erfindung, in Draufsicht,
- Figur 7b:: einen Ausschnitt einer vierten Ausführungsform der erfindungsgemäßen Vorrichtung zur Durchführung des erfindungsgemäßen Verfahrens in Draufsicht, und
- Figur 8:: eine Schnittansicht nach einer weiteren Vorrichtung zur Durchführung eines Mischverfahrens, nicht gemäβ der Erfindung.

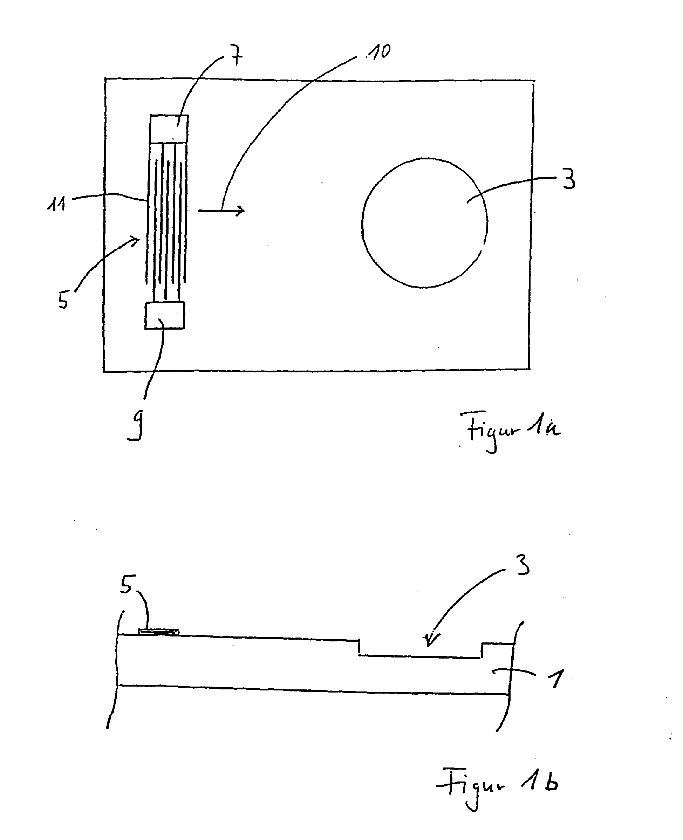

Figur 1 zeigt in Draufsicht (Figur 1a) und in schematischer Schnittansicht (Figur 1b) eine Mischvorrichtung. Der gezeigte Ausschnitt aus einer Chipoberfläche hat die Größenordnung einiger Millimeter. Auf einer Festkörperoberfläche, deren Ausschnitt in Figur 1a sichtbar ist, ist eine einige Mikrometer tiefe Vertiefung 3 vorgesehen. Ein Interdigitaltransducer 5 ist benachbart dazu auf dem Festkörper 1 angeordnet. Der Interdigitaltransducer 5 umfaßt in an sich bekannter Weise Elektroden 9 und 7, die fingerartige Fortsätze 11 umfassen, die im Abstand einiger Mikrometer ineinander greifen. Der Festkörper 1 ist ein piezoelektrischer Kristall, z. B. Lithiumniobat. Alternativ kann ein nichtpiezoelektrischer Festkörper mit einer piezoelektrischen Beschichtung, z. B. Zinkoxid, vorgesehen sein.

Der interdigitaltransducer 5 der gezeigten Ausführungsform besteht aus Elektroden 7 und 9 mit fingerartig ineinander greifenden Elektrodenstrukturen 11. Die fingerartigen Elektrodenstrukturen und die Elektroden 7 und 9 können z. B. lithographisch definiert und als metallische Beschichtung aufgedampft worden sein. Die Schichtdicke beträgt z. B. einige 100 Nanometer bis einige Mikrometer. Die Dicken sind in Figur 1b wie auch in den folgenden Figuren nicht maßstabsgetreu. In der Figur sind die fingerartig ineinander greifenden Elektrodenstrukturen nur schematisch gezeigt. Tatsächlich umfaßt ein Transducer gegebenenfalls eine viel größere Anzahl von ineinander greifenden Fingerelektroden.

Bei Anlegen einer Wechselspannung an die Elektroden des Interdigitaltransducers 5 wird eine Oberflächenschallwelle erzeugt, deren Frequenz sich als Quotient aus der Oberflächenschallgeschwindigkeit und des Fingerabstandes ergibt. Die Wellenlänge entspricht dabei in bekannter Weise dem Fingerabstand zwischen zwei benachbarten Fingern einer Elektrode. Die Abstrahlrichtung der Oberflächenschallwelle ist senkrecht zu der Verbindungslinie zwischen den Elektroden 7 und 9. Die hier interessierende Abstrahlung ist mit 10 bezeichnet. Das elektrische Wechselfeld kann entweder über nicht gezeigte Zuleitungen an die Elektroden 7 und 9 angelegt werden, oder mit Hilfe einer an die Elektroden angeschlossenen Antenneneinrichtung drahtlos eingestrahlt werden.

Eine solche Vorrichtung läßt sich wie folgt einsetzen.

Eine zu mischende Flüssigkeit bzw. die zu mischenden Flüssigkeiten werden z. B. mit einem Pipettierroboter in die Vertiefung 3 eingebracht. Mit Hilfe des Interdigitaltransducers 5 wird eine Oberflächenschallwelle mit der Abstrahlrichtung 10 generiert. Diese Oberflächenschallwelle trifft auf die Flüssigkeitsmenge in der Vertiefung 3 und erzeugt dort durch die Deformation der Festkörperoberfläche eine turbulente Bewegung, die zur Durchmischung führt. Bei geladener bzw. polarisierbarer Materie in der Flüssigkeit wird zusätzlich ein impulsübertrag der Oberflächenwelle durch die elektrischen Felder erzeugt, die in dem piezoelektrischen Kristall die mechanische Deformation der Oberfläche begleiten.

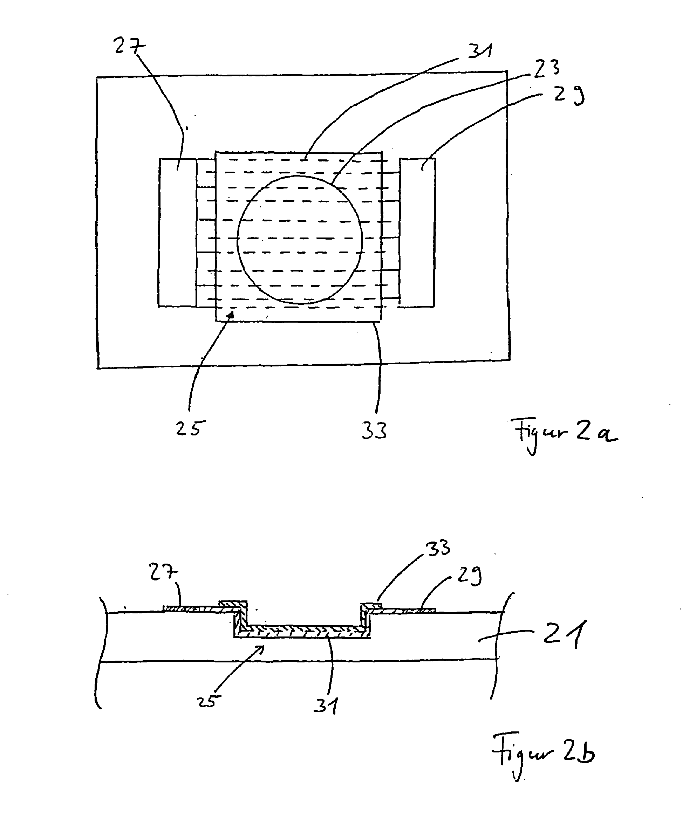

Figur 2 zeigt eine erfindungsgemäße Ausführungsform. Wiederum zeigt Figur 2a eine Draufsicht und Figur 2b eine schematische Schnittansicht.

Auf der Oberfläche der Vertiefung 23 befindet sich ein interdigitaltransducer 25 mit Elektroden 29 und 27, die fingerartige Fortsätze 31 haben. Die fingerartigen Fortsätze erstrecken sich in die Vertiefung 23, während die Elektroden 27 und 29 bei der gezeigten Ausführungsform außerhalb der Vertiefung angeordnet sind. 21 bezeichnet in der Figur wiederum das piezoelektrische Substrat.

Oberhalb des Interdigitaltransducer 31 ist zumindest in dessen Bereich eine Beschichtung 33, z. B. aus Siliziumdioxid, vorgesehen, die z. B. eine biokompatible Schutzschicht darstellt.

Auch bei der erfindungsgemäβen Ausführungsform der Figur 2 wird die zu durchmischende Flüssigkeit in die Vertiefung 23 eingebracht. Die biokompatible Schutzschicht 33 verhindert, daß die Flüssigkeit direkt mit der metallischen Elektrodenstruktur des Interdigitaltransducers 25 in Berührung kommt. Handelt es sich bei der Flüssigkeit um eine Flüssigkeit mit biologischem Material, wird duch das Siliziumdioxid eine Schädigung des biologischen Materiales verhindert.

Im Anschluß wird ähnlich wie bei der oben geschilderten ersten Ausführungsform ein elektrisches Wechselfeld einiger MHz bis einiger 100 MHz an den Interdigitaltransducer 25 angelegt, um eine Oberflächenschallwelle zur Deformierung der Oberfläche zu erzeugen. Im Bereich des Interdigitaltransducers 25 ist die Intensität der Oberflächenschallwelle sehr stark und führt auf diese Weise wiederum über die Deformation des Festkörpers bzw. über die elektrische Kraftwirkung auf geladene bzw. polarisierbare Materie zu eine effektiven Durchmischung.

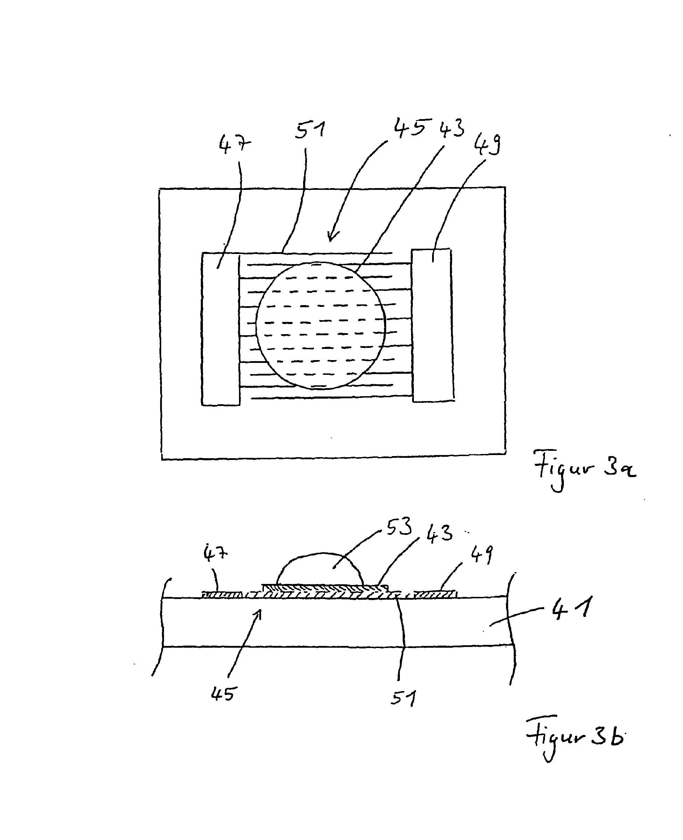

Eine weitere erfindungsgemäße Ausführungsform ist Gegenstand der Figur 3, bei der wiederum die Figur 3a eine schematische Draufsicht und die Figur 3b eine Querschnittsansicht zeigt. Diese Ausführungsform weist keine Vertiefung auf. Auf dem Festkörper 41 ist der Interdigitaltransducer 45 mit Elektroden 47 und 49 vorgesehen, die wiederum fingerartig ineinander greifende Elektrodenfortsätze 51 aufweisen. Bei der gezeigten Ausführungsform befindet sich oberhalb des Interdigitaltransducers eine Beschichtung 43, die derart gewählt ist, daß sich die zu manipulierende Flüssigkeit bzw. die zu manipulierenden Flüssigkeiten bevorzugt darauf aufhalten. Die Beschichtung 43 ist also so gewählt, daß sie von der Flüssigkeit stärker benetzt wird als ihre laterale Umgebung.

Alternativ kann vorgesehen sein, daß die Umgebung eines Bereiches, in dem sich der Interdigitaltransducer 45 befindet, derartige Benetzungseigenschaften aufweist, daß sich die kleine Flüssigkeitsmenge weniger bevorzugt darauf aufhält als auf dem Bereich, in dem der Interdigitaltransducer 51 vorgesehen ist. Zur Manipulation von wäßrigen Flüssigkeiten ist dazu der umgebende Bereich hydrophob im Vergleich zu dem Bereich, in dem sich der Interdigitaltransducer 45 befindet. Hydrophobe Benetzungseigenschaften werden z. B. durch Silanisierung der Oberfläche erreicht.

Bei einer solchen Ausgestaltung mit silanisierter Umgebung kann dennoch zusätzlich eine Beschichtung 43, z. B. aus Siliziumdioxid, vorgesehen sein, um den Interdigitaltransducer zu schützen bzw. die Biokompatibilität zu sichern.

Zum Beispiel wäßrige Flüssigkeiten werden auf den Bereich mit dem Interdigitaltransducer 45 gebracht. Anlegen eines elektrischen Wechselfeldes bewirkt ebenso wie bei der Ausführungsform der Figur 2 einen Impulsübertrag einer Oberflächenschallwelle auf die Flüssigkeitsmenge 53. Auf diese Weise wird auch bei dieser Ausführungsform die Durchmischung effektiv gefördert.

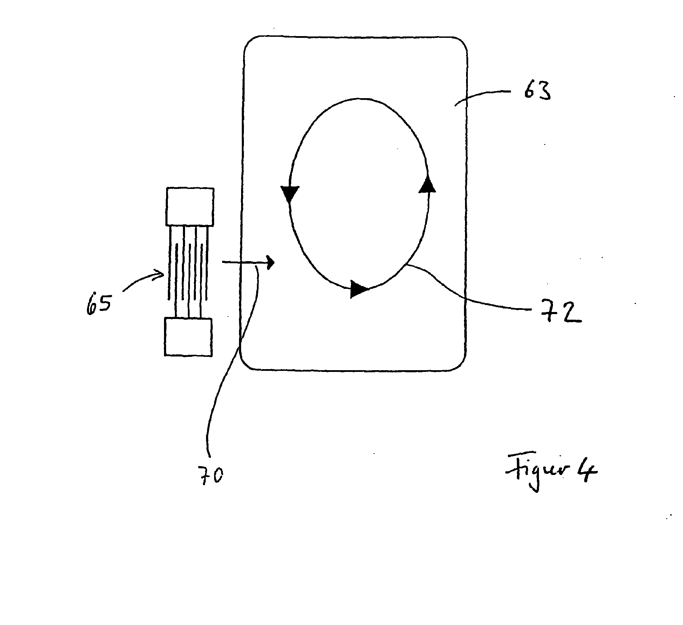

In Figur 4 ist eine Mischvorrichtung mit einem bevorzugten Aufenthaltsbereich 63 gezeigt, der z. B. durch die Modulation der Benetzungseigenschaften in bereits beschriebener Weise erzeugt wird. Ein Transducer 65, der z. B. dem oben beschriebenen Transducer 5 entspricht, ist derart auf der Festkörperoberfläche angeordnet, daß der Schallpfad 70 einer mit ihm erzeugten Oberflächenschallwelle dezentral auf den bevorzugten Aufenthaltsbereich 63 trifft.

Auf dem bevorzugten Aufenthaltsbereich 63 befindet sich eine in der Figur nicht gezeigte Flüssigkeitsmenge. Wird mit dem Transducer 65 eine Oberflächenwelle erzeugt, so breitet sich diese in Richtung 70 aus und trifft dezentral auf die Flüssigkeitsmenge. Ist die Intensität der Oberflächenschallwelle ausreichend gering, so wird die Flüssigkeitsmenge von dem impuls der Oberflächenschallwelle nicht von dem bevorzugten Aufenthaltsbereich 63 entfernt. Durch den impulsübertrag wird jedoch eine Bewegung innerhalb der Flüssigkeitsmenge erzeugt, die zu einer Turbulenz entsprechend dem Strömungsprofil 72 führt. So ist eine effektive Durchmischung zu erreichen.

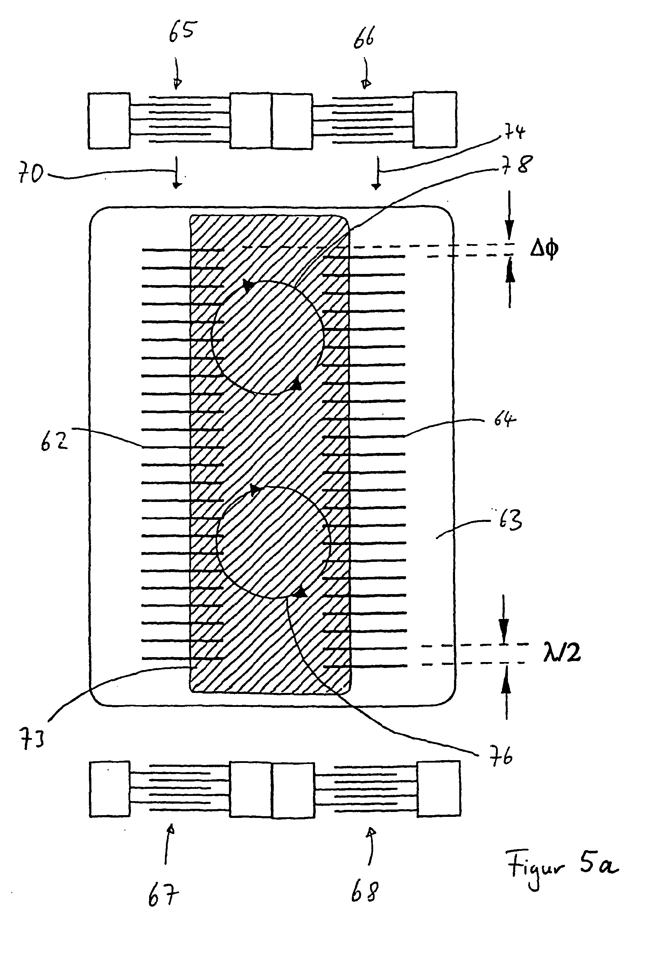

Bei der Mischvorrichtung der Figur 5a sind zwei Transducer 65 und 66 vorgesehen, die jeweils einen Schallpfad 70 bzw. 74 haben, der dezentral auf den bevorzugten Aufenthaltsbereich 63 trifft.

Mit 62 bzw. 64 sind exemplarisch "Wellenberge" jeweiliger Oberflächenschallwellen angedeutet, die mit Transducern 65 bzw. 66 erzeugt werden, wenn an diese eine phasenverschobene Wechselspannung gleicher Frequenz angelegt wird. Die Phasenverschiebung zwischen den Oberflächenschallwellen ist mit Δ Φ bezeichnet. 73 bezeichnet beispielhaft eine Flüssigkeitsmenge. Die Oberflächenwellen treffen seitlich auf die Flüssigkeitsmenge 73. Durch die Phasenverschiebung werden Vortizes erzeugt, die beispielhaft mit 76 und 78 angedeutet sind.

In Figur 5a sind optional weitere Transducer 67 und 68 vorgesehen, mit denen jeweils eine Oberflächenschallwelle erzeugt werden kann, die den Oberflächenwellen der Oberflächenwellenerzeugungseinrichtungen 65 bzw. 66 entgegenwirkt. Auf diese Weise ist eine höhere Flexibilität bei der Anwendung gegeben. Bei geeigneter Wahl der Phase zwischen den gegenüberliegenden Transducern 65 und 67 läßt sich auch eine stehende Oberflächenwelle anregen, die im Bereich zwischen ihren Knoten eine starke Durchmischung bewirken kann.

Ein ähnlicher Effekt läßt sich erreichen, wenn die Interdigitaltransducer auf der Chipoberfläche mit unterschiedlichem Abstand zum bevorzugten Aufenthaltsbereich angeordnet sind. Durch die unterschiedlichen Laufzeiten der Oberflächenschallwelle läßt sich auch auf diese Weise eine Phasenverschiebung zwischen den Oberflächenwellen erreichen, die mit den Interdigitaltransducem erzeugt werden.

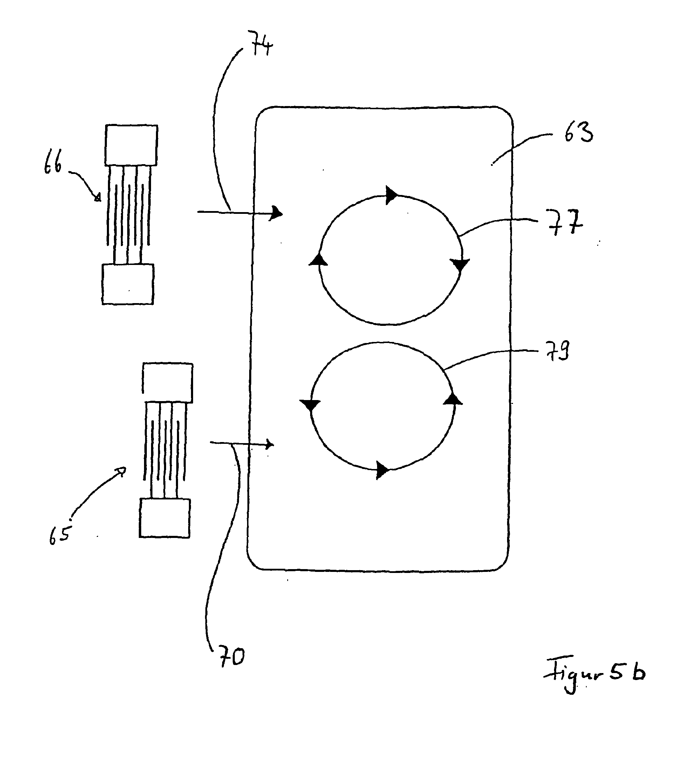

Figur 5b zeigt eine Abwandlung, bei der ebenfalls zwei Transducer eingesetzt werden, um Wirbel zu erzeugen. Die mit den Transducern 65 bzw. 66 erzeugten Oberflächenschallwellen mit der Schallpfadrichtung 70 bzw. 74 treffen dezentral auf den bevorzugten Aufenthaltsbereich 63, auf dem sich eine der Übersichtlichkeit halber nicht gezeigte Flüssigkeitsmenge befindet. Werden die Transducer 65 und 66 mit jeweils einem Wechselfeld angeregt, deren Phasenbeziehung derart ist, daß am Ort des Aufenthaltsbereiches 63 die mit den Transducern 65 bzw. 66 erzeugten Oberflächenschallwellen gleichphasig sind, so bilden sich in einer Flüssigkeitsmenge, die sich auf dem Aufenthaltsbereich 63 der Figur 5b befindet, die mit 77 und 79 angedeuten Vortizes. Auch hier wird eine effektive Durchmischung einer Flüssigkeitsmenge auf dem bevorzugten Aufenthaltsbereich 63 erreicht.

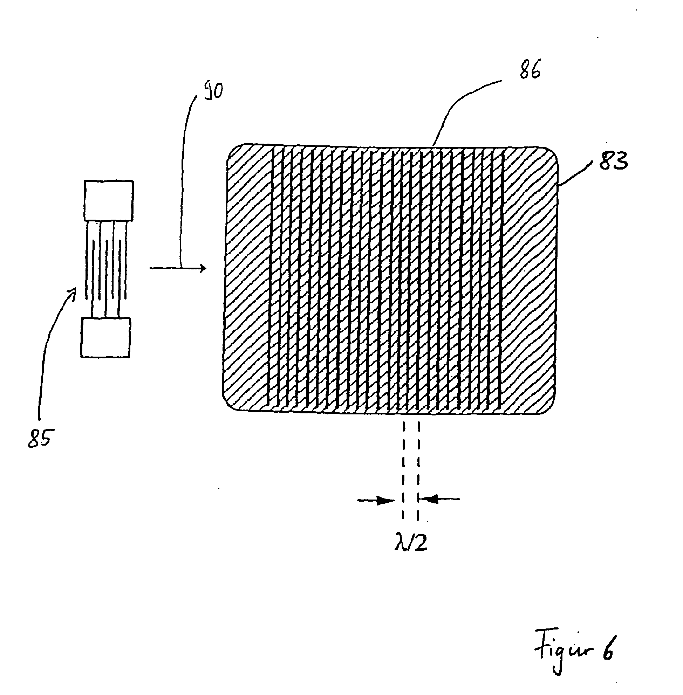

In Figur 6 ist eine erfindungsgemäße Ausführungsform mit einem Resonator gezeigt. 85 bezeichnet wiederum einen interdigitaltransducer entsprechend dem Transducer 5 der Ausführungsform der Figur 1. 83 bezeichnet einen bevorzugten Aufenthaltsbereich, der z. B. wieder durch Modulation der Benetzungseigenschaften gegenüber der umgebenden Festkörperoberfläche erzeugt worden ist. In dem bevorzugten Aufenthaltsbereich ist ein Resonator angeordnet. Dieser entspricht z. B. einer fingerartigen Metallbeschichtung mit einem Fingerabstand von der halben Wellenlänge, die eine Oberflächenschallwelle hat, die in Richtung 90 von dem Interdigitaltransducer 85 abgestrahlt werden kann, wenn an diesen ein Wechselfeld angelegt wird. Ein Streifen dieser Metallbeschichtung ist exemplarisch mit 86 bezeichnet. Alternativ kann z. B. eine periodische Rinnenätzung vorgesehen sein.

Die Resonatorstreifen sind vorzugsweise im Abstand der halben Wellenlänge angeordnet und bilden Diskontinuitäten in der akustischen Impedanz der freien Oberfläche. Auf einem piezoelektrischen Substrat kommt neben der Diskontinuität des Massebelags der Streifen auch noch eine Diskontinuität der elektrischen Randbedingungen positiv hinzu. Ein Metall als Resonator auf der Oberfläche eines Piezoelektrikums verringert aufgrund des Kurzschlusses der piezoelektrischen Felder zusätzlich die Schallgeschwindigkeit unterhalb des Metalles.

Ein solcher Resonator erhöht die Oberflächenschallwellenamplitude am Ort der Mischung in dem bevorzugten Aufenthaltsbereich. In einem solchen Resonator bildet sich bei Einstrahlung einer Oberflächenschallwelle ein lokal überhöhtes Stehwellenfeld aus, das durch phasenrichtige Reflexionen an den einzelnen periodisch angeordneten Diskontinuitäten entsteht.

Die Resonatorstreifen können von dem bevorzugten Aufenthaltsbereich durch eine Zwischenschicht isoliert sein. Ebenso kann auf dem Resonator eine Beschichtung vorgesehen sein, die zum Schutz der darauf befindlichen Flüssigkeitsmenge dient. Der Übersichtlichkeit halber sind derartige Ausführungsformen in der Figur 6 nicht dargestellt.

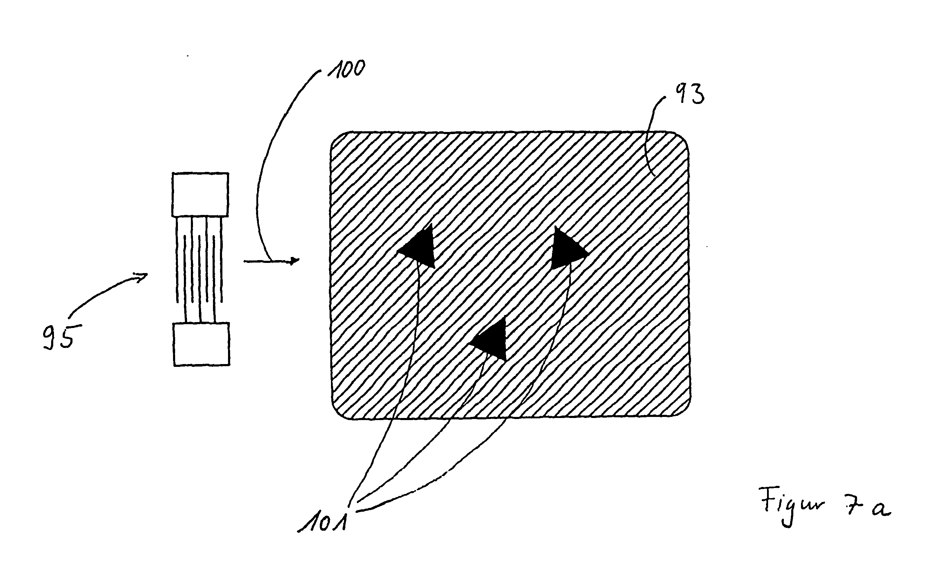

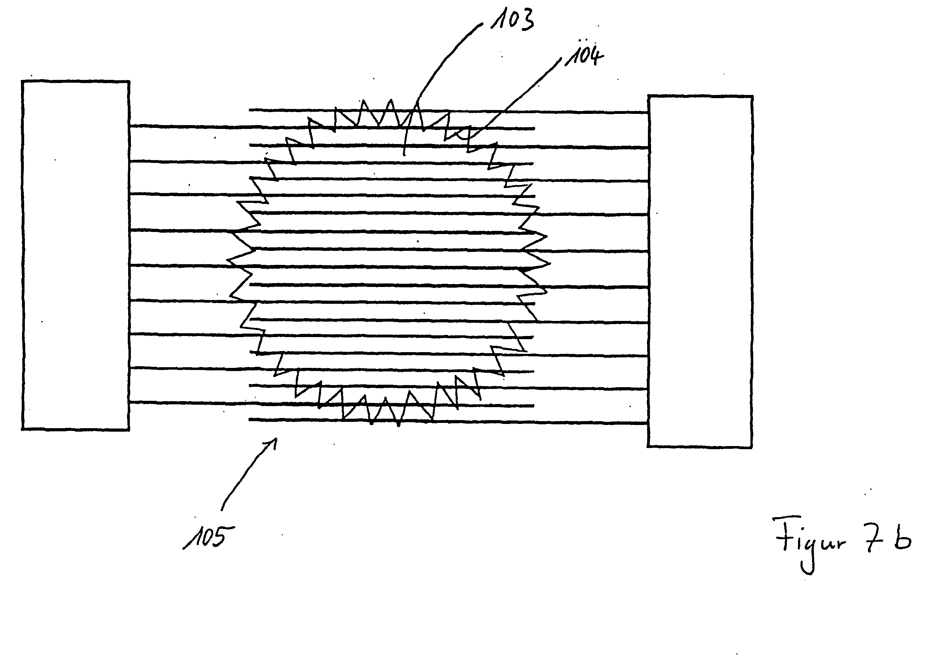

In Figuren 7a und 7b sind zwei Mischvorrichtungen beispielhaft gezeigt, in denen Störelemente vorgesehen sind, die zur Erhöhung der Turbulenz dienen. In Figur 7a bezeichnet 95 wiederum einen Transducer, der zumindest auch in der Richtung 100 eine Oberflächenwelle in bereits beschriebener Weise abstrahlen kann. Mit 93 ist ein bevorzugter Aufenthaltsbereich gezeigt, der z. B. wieder durch Modulation der Benetzungseigenschaften entstanden sein kann. 101 bezeichnet Verwirblerstrukturen, deren Benetzungseigenschaften den . Benetzungseigenschaften der Festkörperoberfläche außerhalb des bevorzugten Aufenthaltsbereiches entsprechen. Eine Flüssigkeit, die sich auf dem bevorzugten Aufenthaltsbereich 93 befindet, wird durch diese Störelemente 101 an einer laminaren Bewegung gehindert. Es entstehen Turbulenzen, die durch die ungünstigen Benetzungseigenschaften der Störelemente 101 hervorgerufen werden.

Bei der erfindungsgemäβen Ausführungsform der Figur 7b befindet sich der bevorzugte Aufenthaltsbereich 103 in dem Bereich der Finger des Transducers 105, ähnlich der Ausführungsform der Figur 3. Bei der Ausführungsform der Figur 7b ist der bevorzugte Aufenthaltsbereich jedoch nicht mit einem glatten Rand versehen, sondern mit Zacken 104. Eine Bewegung, die mit Hilfe des impulsübertrages durch den Interdigitaltransducer auf eine Flüssigkeitsmenge auf dem bevorzugten Aufenthaltsbereich 103 erzeugt wird, wird durch die Zacken 104 gestört, so daß Turbulenzen erzeugt werden, die die Durchmischung fördern.

Die in Figur 7 gezeigten Störelemente sind nur als Beispiel zu verstehen. Andere Geometrien der Störelemente zur Erzeugung von Turbulenz auf dem bevorzugten Aufenthaltsbereich bzw. in der Vertiefung sind selbstverständlich ebenfalls denkbar. Die Verwirblerstrukturen werden z. B. durch Ätzen hergestellt.

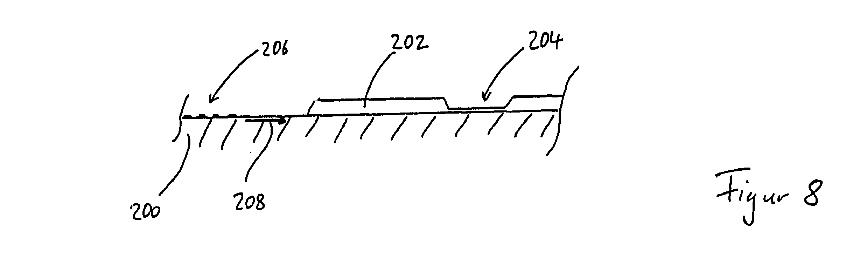

Figur 8 zeigt den schematischen Schnitt durch eine andere Mischvorrichtung. Hier bezeichnet 200 einen Lithiumniobatkristall als piezoelektrisches Festkörpersubstrat. Auf einem Teil des Kristalles 200 ist eine Beschichtung 202 aus Siliziumdioxid vorgesehen, die einen geätzten Bereich 204 aufweist. Ein Interdigitaltransducer, wie er bereits oben beschrieben ist, ist mit 206 bezeichnet. Angedeutet ist die Richtung 208 einer Oberflächenschallwelle, die von dem Interdigitaltransducer 206 ausgesendet werden kann, wenn an diesen ein entsprechendes Wechselfeld angelegt wird. Die Oberflächenschallwelle breitet sich in dem piezoelektrischen Kristall auch auf der Siliziumdioxidbeschichtung aus. In dem geätzten Bereich 204 ist die Dicke der Siliziumdioxidschicht so klein gewählt, daß sie sehr klein gegenüber der Wellenlänge einer Oberflächenwelle ist, die mit dem interdigitaltransducer 206 erzeugt werden kann. Das heißt, die Dicke der Beschichtung 202 im geätzten Bereich 204 ist sehr klein gegenüber dem Fingerabstand des interdigitaltransducers 206. Eine Oberflächenschallwelle, die im Grenzbereich zwischen dem piezoelektrischen Kristall 200 und der Siliziumdioxidschicht 202 läuft, wird bei einer derart dünnen Siliziumdioxidschicht in dem geätzten Bereich 204 mit einer Flüssigkeitsmenge wechselwirken können, die sich in dem geätzten Bereich 204 befindet. Eine solche Ausführungsform hat den Vorteil, daß Siliziumdioxid sehr leicht zu ätzen ist und so eine definierte Aufnahme für die Flüssigkeitsmenge erzeugt werden kann. Dennoch kann die Metallstruktur des interdigitaltransducers 206 auf dem piezoelektrischen Kristall mit bekannten lithographischen Beschichtungsverfahren sehr leicht aufgebracht werden.

Zusätzlich kann bei allen Ausführungsformen eine Heizeinrichtung, z. B. eine Widerstandsheizung, vorgesehen sein, die eine zusätzliche Durchmischung oder Temperaturkonvektion erzeugt. Der Übersichtlichkeit halber zeigt keine der Figuren eine solche Ausführungsform.

Die Flüssigkeit kann in die aktiven Bereiche z. B. mit einem Pipettierroboter eingebracht werden. Ebenso kann jedoch in nicht dargestellter, Weise eine Zuleitung vorgesehen sein. Dies kann ein Kanal sein, durch den die Flüssigkeit geschickt wird, oder aber, z. B. bei einer Ausführungsform gemäß einer der Figuren 3 bis 7, ein schmaler Streifen auf der Festkörperoberfläche, der die gleichen Benetzungseigenschaften wie der aktive Bereich 43 hat. Über eine solche Zuleitung kann Flüssigkeit, z. B. auch durch impulsübertrag einer Oberflächenschallwelle in den aktiven Bereich des interdigitaltransducers 45 gebracht werden.

Der Übersichtlichkeit halber sind in den Figuren Ausführungsformen gezeigt, bei denen nur ein Interdigitaltransducer vorgesehen ist. Es können jedoch mehrere Interdigitaltransducer, z. B. verschiedener Fingerabstände, vorgesehen sein. Die Transducer können ggf. um den Wechselwirkungsbereich herum angeordnet sein. Der Interdigitaltransducer muß auch nicht notwendigerweise einen konstanten Fingerabstand aufweisen. Mit einem Interdigitaltransducer nicht konstanten Fingerabstandes ist der Schallpfad auch in lateraler Richtung begrenzt, da nur in einem kleinen Bereich des Transducers die Resonanzbedingung erfüllt sein kann.

Die für einige der Ausführungsformen beschriebenen Beschichtungen oberhalb der Resonatoren und/oder interdigitaltransducer werden vorteilhaft mit einer Dicke gewählt, die klein oder in etwa gleich der Wellenlänge ist, die von den Interdigitaltransducem ausgesendet werden. Eine solche Beschichtung dämpft die Oberflächenschallwelle mechanisch nicht zu stark, verhindert jedoch eine kapazitive Kopplung der Elektroden, die zu einer Verminderung der Effizienz führen würde, mit der die interdigitaltransducer elektrische Energie in akustische Energie umwandeln. Eine solche Beschichtung ist vorzugsweise isolierend mit einer hohen Dielektrizitätskonstante, z. B. aus Photolack, Siliziumdioxid oder Siliziumnitrid. Solche Beschichtungen können auch bei Ausführungsformen vorgesehen sein, für die oben eine Beschichtung nicht explizit erwähnt oder gezeigt ist.

Die beschriebenen erfindungsgemäβen Ausführungsformen sind nur als Beispiele von erfindungsgemäßen Vorrichtungen zu verstehen. Selbstverständlich können auch andere Kombinationen der erfindungsgemäßen Merkmale vorgesehen sein. Zum Beispiel kann eine Resonatorstruktur, wie sie mit Bezug zu Figur 6 beschrieben ist, auch bei einer Ausführungsform vorgesehen sein, die eine Vertiefung anstelle des bevorzugten Aufenthaltsbereiches 83 zeigt. Ebenso können Störelemente, wie sie mit Bezug zur Figur 7 gezeigt sind, auch in Ausführungsformen vorgesehen sein, in denen der bevorzugte Aufenthaltsbereich 93 bzw. 103 durch Vertiefungen ersetzt ist, wie es z. B. bei der Ausführungsform der Figur 2 der Fall ist. Auch Ausführungsformen, bei denen die Oberflächenschallwelle nicht zentral auf die Flüssigkeitsmenge trifft, können Vertiefungen anstelle der bevorzugten Aufenthaltsbereiche aufweisen, wie sie in Figur 4 bzw. Figur 5 beschrieben sind.

Die Erfindung ist nicht auf die Realisierung auf einer freien Chipoberfläche begrenzt. Ebenso können zwei gegenüberliegende Festkörperoberflächen vorgesehen sein, zwischen denen sich die Flüssigkeit befindet. Bei einer solchen Anordnung kann sich z. B. die Oberflächenwellenerzeugungseinrichtung auf einer Oberfläche befinden und die die Bewegung der Flüssigkeitsmenge begrenzende Struktur, also z. B. die Vertiefung oder der bevorzugte Aufenthaltsbereich, auf der anderen Festkörperoberfläche. Berührt eine kleine Flüssigkeitsmenge beide Oberflächen, können die beschriebenen Effekte auch mit dieser Ausgestaltung der Erfindung erreicht werden.

Alle gezeigten und beschriebenen Ausführungsformen können Teil eines größeren Systemes sein, in dem mehrere Mischvorrichtungen auf einer Festkörperoberfläche angeordnet sind. Auf der Chipoberfläche können sich auch andere Analyse- bzw. Syntheseeinrichtungen befinden.

Die erfindungsgemäße Vorrichtung bzw. das erfindungsgemäße Verfahren eignen sich zur effektiven Durchmischung kleinster Flüssigkeitsmengen, um darin z. B. eine Reaktion zu fördern. Die erfindungsgemäße Vorrichtung und das erfindungsgemäße Verfahren unterstützen effektiv die Ausbildung homogener thermodynamischer Bedingungen in der Flüssigkeitsmenge. Ebenso können verschiedene Flüssigkeitsmengen, ohne durch die Diffusion begrenzt zu sein, schnell und effektiv miteinander vermischt werden. Bei einer anderen Anwendung des erfindungsgemäßen Verfahrens wird ein Feststoff, wie z. B. Pulver in den Wechselwirkungsbereich gebracht. Im Anschluß wird eine Flüssigkeit in den aktiven Bereich gebracht. Mit Hilfe des impulsübertrages der Oberflächenschallwelle kann die Auflösung des Pulvers signifikant beschleunigt werden. Schließlich können die erfindungsgemäße Vorrichtung und das erfindungsgemäße Verfahren auch effektiv zur Verteilung von Materie, z. B. biologischem Material, in der Flüssigkeit eingesetzt werden.

Besonders vorteilhaft läßt sich das erfindungsgemäße Verfahren zur Untersuchung der Bindungsstärke von mikroskopisch kleinen Objekten, z. B. Zellen oder Bakterien an funktionalisierten Oberflächen einsetzen, wobei eine erfindungsgemäße Mischvorrichtung als Zelladhäsionsassay eingesetzt wird.

## Patentansprüche

1. Mischverfahren zum Durchmischen mindestens einer kleinen Flüssigkeitsmenge, bei dem mindestens eine Flüssigkeitsmenge (53) auf einen Wechselwirkungsbereich (23, 43, 83, 103) einer Festkörperoberfläche, vorzugsweise eines Chips, gebracht wird und zumindest eine Oberflächenschallwelle mit der mindestens einen Flüssigkeitsmenge (53) in Wechselwirkung gebracht wird, um sie zu durchmischen, wobei
die mindestens eine Flüssigkeitsmenge (53) auf einen Teil (23, 43, 103) der Oberfläche gebracht wird, auf dem sich eine Erzeugungseinrichtung (25, 45, 105) für die zumindest eine Oberflächenschallwelle befindet, und/oder die Flüssigkeitsmenge auf einen Bereich gebracht wird, in dem sich ein Resonator (86) für eine Oberflächenschallwelle befindet, die von einer von dem Resonatorbereich beabstandeten Oberflächenschallwellenerzeugungseinrichtung (85) ausgesendet wird.

2. Mischverfahren nach Anspruch 1, bei dem die mindestens eine Flüssigkeitsmenge in eine Vertiefung (23) in der Festkörperoberfläche eingebracht wird.

3. Mischverfahren nach einem der Ansprüche 1 oder 2, bei dem die mindestens eine Flüssigkeitsmenge (53, 73) auf einen Teil (43, 83, 103) der Oberfläche gebracht wird, der von seiner lateralen Umgebung derartig unterschiedliche Benetzungseigenschaften aufweist, dass die Flüssigkeit sich bevorzugt darauf aufhält.

4. Mischverfahren nach einem der Ansprüche 1 bis 3, bei dem die Oberflächenschallwelle gepulst wird.

5. Mischverfahren nach Anspruch 4, bei dem die Pulsfrequenz der Oberflächenschallwelle derart ausgewählt wird, dass sie in Resonanz mit einer Eigenfreqenz der kleinen Flüssigkeitsmenge (53) auf dem Wechselwirkungsbereich (23, 43, 83, 103) ist.

6. Mischverfahren nach einem der Ansprüche 1 bis 5, bei dem die mindestens eine Oberflächenschallwelle dezentral auf die Flüssigkeitsmenge geschickt wird.

7. Mischverfahren nach einem der Ansprüche 1 bis 6, bei dem zumindest zwei Oberflächenschallwellen auf die Flüssigkeitsmenge geschickt werden, deren Phasenverschiebung (ΔΦ) ungleich einem Vielfachen ihrer Wellenlänge (λ) ist, vorzugsweise gleich der halben Wellenlänge.

8. Mischverfahren nach einem der Ansprüche 1 bis 7, bei dem die zumindest eine Oberflächenschallwelle mit einem Interdigitaltransducer (25, 45, 85, 105) erzeugt wird.

9. Mischverfahren nach einem der Ansprüche 1 bis 8, bei dem die zumindest eine Oberflächenschallwelle mit einer Oberflächenschallwellenerzeugungsein- richtung mit einer vorzugsweise biokompatiblen Beschichtung erzeugt wird.

10. Mischverfahren nach Anspruch 9, bei dem eine isolierende Beschichtung der Oberflächenschallwellenerzeugungseinrichtung eingesetzt wird.

11. Mischverfahren nach einem der Ansprüche 9 oder 10, bei dem eine Beschichtung hoher Dielektrizitätskonstante auf der Oberflächenschallwellenerzeugungseinrichtung eingesetzt wird.

12. Mischverfahren nach einem der Ansprüche 1 bis 11, bei dem sich die Flüssigkeitsmenge in einem Bereich befindet, in dem sich Störelemente zur Erzeugung von Verwirbelungen in der Flüssigkeitsmenge befinden.

13. Mischverfahren nach einem der Ansprüche 1 bis 12, bei dem mehrere Flüssigkeitsmengen zur Mischung auf den Wechselwirkungsbereich (23, 43, 83, 103) gebracht werden.

14. Mischverfahren nach einem der Ansprüche 1 bis 12, bei dem ein zu lösendes Material auf den Wechselwirkungsbereich (23, 43, 83, 103) gebracht wird, mit einer Flüssigkeit in Kontakt gebracht wird und durch Einwirkung einer Oberflächenschallwelle in der Flüssigkeit aufgelöst wird.

15. Mischverfahren nach einem der Ansprüche 1 bis 14, bei dem die mindestens eine Flüssigkeitsmenge (53) zusätzlich geheizt wird.

16. Mischvorrichtung zum Durchmischen mindestens einer kleinen Flüssigkeitsmenge zur Durchführung eines Verfahrens nach Anspruch 1, mit mindestens einer Oberflächenschallwellenerzeugungseinrichtung (25, 45, 85, 105) auf einer Festkörperoberfläche und einem Wechselwirkungsbereich (23, 43, 83, 103), der zu der mindestens einen Oberflächenschallwellenerzeugungseinrichtung derart angeordnet ist, dass er beim Betrieb der mindestens einen Oberflächenschallwellenerzeugungseinrichtung von der generierten Oberflächenschallwelle verformt wird, wobei sich der Wechselwirkungsbereich und die mindestens eine Oberflächenschallwellenerzeugungseinrichtung zumindest teilweise überdecken und/oder ein Resonator (86) im Wechselwirkungsbereich (83) vorgesehen ist, der derart ausgestaltet ist, dass eine Oberflächenschallwelle, die mit der mindestens einen Oberflächenschallwellenerzeugungseinrichtung (85) erzeugt wird, resoniert.

17. Mischvorrichtung nach Anspruch 16, bei der der Wechselwirkungsbereich als Vertiefung (23) ausbebildet ist und die Tiefe dieser Vertiefung klein gegen die Wellenlänge einer Oberflächenschallwelle ist, die mit der Oberflächenschallwellenerzeugungseinrichtung (5, 206) erzeugt werden kann.

18. Mischvorrichtung nach Anspruch 17, bei der der Wechselwirkungsbereich (23) als Vertiefung ausgestaltet ist und die mindestens eine Oberflächenschallwellenerzeugungseinrichtung (25) zumindest teilweise in der Vertiefung angeordnet ist.

19. Mischvorrichtung nach einem der Ansprüche 17 oder 18, bei der die Vertiefung eine Vertiefung in einer Beschichtung auf einem Festkörper umfaßt.

20. Mischvorrichtung nach Anspruch 19, bei der die Beschichtung Siliziumdioxid umfaßt.

21. Mischvorrichtung nach Anspruch 16, bei der Wechselwirkungsbereich einen bevorzugten Aufenthaltsbereich (43, 83,103) auf der Festkörperoberfläche umfaßt, dessen Benetzungseigenschaften sich von seiner lateralen Umgebung derart unterscheiden, dass sich die Flüssigkeitsmenge bevorzugt darauf aufhält.

22. Mischvorrichtung nach Anspruch 21, bei der die Umgebung des bevorzugten Aufenthaltsbereiches (43, 83, 103) silanisiert ist.

23. Mischvorrichtung nach einem der Ansprüche 16 bis 22, bei der der Wechselwirkungsbereich und die zumindest eine Oberflächenschallwellenerzeugungseinrichtung derart zueinander angeordnet sind, dass eine Oberflächenschallwelle, die mit der mindestens einen Oberflächenschallwellenerzeugungseinrichtung generiert wird, dezentral auf den Wechselwirkungsbereich wirkt.

24. Mischvorrichtung nach einem der Ansprüche 16 bis 23, mit zumindest zwei Oberflächenschallwellenerzeugungseinrichtungen zur Erzeugung von Oberflächenschallwellen, die im Wechselwirkungsbereich (63) phasenverschoben zueinander sind.

25. Mischvorrichtung nach einem der Ansprüche 16 bis 24, mit Störelementen (104) im Wechselwirkungsbereich (103).

26. Mischvorrichtung nach Anspruch 25, bei dem die Störelemente geätzte Bereiche in einer nicht oder weniger geätzten Umgebung bzw. nicht oder weniger geätzte Bereiche in einer geätzten Umgebung umfassen.

27. Mischvorrichtung nach Anspruch 25, bei dem die Störelemente Bereiche umfassen, die von ihrer Umgebung unterschiedlich beschichtet sind.

28. Mischvorrichtung nach Anspruch 25, bei dem die Störelemente durch eine unregelmäßige Begrenzung (104) des Wechselwirkungsbereiches (103) gebildet werden.

29. Mischvorrichtung nach einem der Ansprüche 16 bis 28, mit einer vorzugsweise biokompatiblen Beschichtung (33, 43) auf der Oberflächenschallwellenerzeugungseinrichtung (25, 45).

30. Mischvorrichtung nach Anspruch 29, bei der die Beschichtung (33, 43) derartige von ihrer lateralen Umgebung unterschiedliche Benetzungseigenschaften aufweist, dass sich die Flüssigkeit bevorzugt darauf aufhält.

31. Mischvorrichtung nach einem der Ansprüche 16 bis 30, bei der die mindestens eine Oberflächenschallwellenerzeugungseinrichtung (25, 45, 85, 105) einen Interdigitaltransducer umfaßt.

32. Mischvorrichtung nach Anspruch 31, mit einem Resonator (86), der periodisch angeordnete Metallbeschichtungen umfaßt, deren Abstand dem Fingerabstand des Interdigitaltransducers (85) entspricht.

33. Mischvorrichtung nach einem der Ansprüche 16 bis 32 mit einem eine Beschichtung aufweisenden Resonator.

34. Mischvorrichtung nach einem der Ansprüche 16 bis 33 mit einer Beschichtung auf der mindestens einen Oberflächenschallwellenerzeugungseinrichtung.

35. Mischvorrichtung nach einem der Ansprüche 33 und 34, bei der die Beschichtung isolierend ist.

36. Mischvorrichtung nach einem der Ansprüche 33 bis 35, bei der die Beschichtung eine hohe Dielektrizitätskonstante aufweist.

37. Mischvorrichtung nach einem der Ansprüche 33 bis 36, bei der die Beschichtung eine Dicke aufweist, die kleiner oder im Wesentlichen gleich der Wellenlänge einer von der zumindest einen Oberflächenschallwellenerzeugungseinrichtung erzeugten Oberflächenschallwelle ist.

38. Mischvorrichtung nach einem der Ansprüche 16 bis 37 mit einer Heizvorrichtung im Bereich des Wechselwirkungsbereiches (23, 43, 83, 103).

39. Verwendung einer Vorrichtung nach einem der Ansprüche 16 bis 38 als Zelladhäsionsassay.

40. Analyseverfahren zur Analyse der Bindungsstärke von Objekten an Oberflächen unter Einsatz eines Verfahrens nach einem der Ansprüche 1 bis 15, bei dem als Flüssigkeitsmenge eine Lösung mit mikroskopisch kleinen Objekten eingesetzt wird und während oder nach der Wechselwirkung der Oberflächenschallwelle mit der Flüssigkeitsmenge in Abhängigkeit der durch die Oberflächenschallwelle in der Flüssigkeitsmenge erzeugten Strömung die Menge an der Oberfläche haftender Objekte untersucht wird.

41. Analyseverfahren nach Anspruch 40, bei dem als Lösung eine Nährlösung eingesetzt wird und die Objekte biologische Objekte, insbesondere Zellen oder Bakterien sind.

42. Analyseverfahren nach einem der Ansprüche 40 oder 41, bei dem die Oberfläche zumindest in einem Teilbereich funktionalisiert ist.

## Claims

1. A mixing method for mixing at least a small quantity of liquid, wherein at least one quantity of liquid (53) is applied to an interaction region (23, 43, 83, 103) of a solid body surface, preferably of a chip, and at least one surface acoustic wave is brought into interaction with the at least one quantity of liquid (53, 73), in order to mix it, wherein the at least one quantity of liquid (53) is applied to a part (23, 43, 103) of the surface, on which a generation device (25, 45, 105) for the at least one surface acoustic wave is located; and/or wherein the quantity of liquid is applied to a region in which a resonator (86) for a surface acoustic wave is located which is transmitted from a surface acoustic wave generating device (85) spaced from the resonator region

2. A mixing method according to claim 1, wherein the at least one quantity of liquid is introduced into a depression (23) in the solid body surface.

3. A mixing method according to one of claims 1 or 2, wherein the at least one quantity of liquid (53, 73) is applied on a part (43, 83, 103) of the surface, which has such different wetting characteristics than its lateral surrounding area that the liquid preferably remains thereon.

4. A mixing method according to any one of claims 1 to 3, wherein the surface acoustic wave is pulsed.

5. A mixing method according to claim 4, wherein the pulse frequency of the surface acoustic wave is selected such that it is in resonance with an eigenfrequency of the small quantity of liquid (53) on the interaction region (23, 43, 83, 103).

6. A mixing method according to any one of claims 1 to 5, wherein the at least one surface acoustic wave is sent decentralized onto the quantity of liquid.

7. A mixing method according to any one of claims 1 to 6, wherein at least two surface acoustic waves are sent onto the quantity of liquid (73) whose phase displacement (ΔΦ) is unequal to a multiple of their wave length (λ), is preferably equal to half the wave length.

8. A mixing method according to any one of claims 1 to 7, wherein the at least one surface acoustic wave is generated with an interdigital transducer (25, 45, 85, 105).

9. A mixing method according to any one of claims 1 to 8, wherein the at least one surface acoustic wave is generated with a surface acoustic wave generating device with a preferably biocompatible coating.

10. A mixing method according to claim 9, wherein an insulating coating of the surface acoustic wave generating device is used.

11. A mixing method according to one of claims 9 or 10, wherein a coating of high dielectricity constant on the surface acoustic wave generating device is used.

12. A mixing method according to any one of claims 1 to 11, wherein the quantity of liquid is located in a region wherein interference elements are located for generating turbulence in the quantity of liquid.

13. A mixing method according to any one of claims 1 to 12, wherein multiple quantities of liquid are applied for mixing on the interaction region (23, 43, 83, 103).

14. A mixing method according to any one of claims 1 to 12, wherein a material to be dissolved is brought onto the interaction region (23, 43, 83, 103), is brought into contact with a liquid and is dissolved into the liquid by action of a surface acoustic wave.

15. A mixing method according to any one of claims 1 to 14, wherein the at least one quantity of liquid (53) is additionally heated.

16. A mixing apparatus for mixing at least one small quantity of liquid by performing a method according to claim 1, with at least one surface acoustic wave generating device (25, 45, 85, 105) on a solid body surface and an interaction region (23, 43, 83, 103) which is arranged to the at least one surface acoustic wave generating device such that it is deformed by the generated surface acoustic wave on the operation of the at least one surface acoustic wave generating device, wherein the interaction region and the at least one surface acoustic wave generating device overlap at least in part and/or a resonator (86) is provided in the interaction region (83) which is designed such that a surface acoustic wave generated with the at least one surface acoustic wave generating device (85) resonates.

17. A mixing apparatus according to claim 16, wherein the interaction region is formed as a depression (23) and the depth of this depression is small relative to the wave length of a surface acoustic wave, which can be generated with the surface acoustic wave generating device (5, 206).

18. A mixing apparatus according to claim 17, wherein the interaction region (23) is designed as a depression and the at least one surface acoustic wave generating device (25) is arranged at least partially in the depression.

19. A mixing apparatus according to one of claims 17 or 18, wherein the depression includes a recess in a coating on a solid body.

20. A mixing apparatus according to claim 19, wherein the coating includes silicon dioxide.

21. A mixing apparatus according to claim 16, wherein the interaction region preferably includes a dwelling region (43, 83, 103) on the solid body surface, whose wetting characteristics differ from its lateral surrounding area such that the quantity of liquid preferably remains thereon.

22. A mixing apparatus according to claim 21, wherein the surrounding area of the preferred dwelling region (43, 83, 103) is silanized.

23. A mixing apparatus according to any one of claims 16 to 22, wherein the interaction region and the at least one surface acoustic wave generating device are arranged relative to one another such that a surface acoustic wave which is generated with the at least one surface acoustic wave generating device acts decentrally on the interaction region.

24. A mixing apparatus according to any one of claims 16 to 23, with at least two surface acoustic wave generating devices for generating surface acoustic waves, which are phase-displaced to one another in the interaction region (63).

25. A mixing apparatus according to any one of claims 16 to 24, with interference elements (104) in the interaction region (103).

26. A mixing apparatus according to claim 25, wherein the interference elements include etched regions in a non-etched or less etched surrounding area or non-etched or less etched regions in an etched surrounding area.

27. A mixing apparatus according to claim 25, wherein the interference elements include regions, which are coated differently from their surrounding area.

28. A mixing apparatus according to claim 25, wherein the interference elements are formed by a non-uniform boundary (104) of the interaction region (103).

29. A mixing apparatus according to any one of claims 16 to 28, with a preferably biocompatible coating (33, 43) on the surface acoustic wave generating device (25, 45).

30. A mixing apparatus according to claim 29, wherein the coating (33, 43) has different wetting characteristics from its lateral surrounding area such that the liquid preferably remains thereon.

31. A mixing apparatus according to any one of claims 16 to 30, wherein the at least one surface acoustic wave generating device (25, 45, 85, 105) includes an interdigital transducer.

32. A mixing apparatus according to claim 31, with a resonator (86) which includes periodically arranged metal coatings, whose distance corresponds to the finger distance of the interdigital transducer (85).

33. A mixing apparatus according to any one of claims 16 to 32 with a resonator having a coating.

34. A mixing apparatus according to any one of claims 16 to 33 with a coating on the at least one surface acoustic wave generating device.

35. A mixing apparatus according to one of claims 33 and 34, wherein the coating is insulating.

36. A mixing apparatus according to any one of claims 33 to 35, wherein the coating has a high dielectricity constant.

37. A mixing apparatus according to any one of claims 33 to 36, wherein the coating has a thickness which is smaller than or substantially equal to the wavelength of a surface acoustic wave generated by the at least one surface acoustic wave generating device.

38. A mixing apparatus according to any one of claims 16 to 37, with a heating device in the region of the interaction region (23, 43, 83, 103).

39. Use of a mixing apparatus according to any one of claims 16 3o 38 as a cell adhesion assay.

40. An analysis method for the analysis of the bond strength of objects to surfaces using a method according to any one of claims 1 to 15, wherein a solution with microscopically small objects is used as the liquid quantity and the quantity of objects adhering to the surface is examined during or after the interaction of the surface acoustic wave with the quantity of liquid in dependence on the flow generated by the surface acoustic wave in the quantity of liquid.

41. An analysis method in accordance with claim 40, wherein a nutrient solution is used as the solution and the objects are biological objects, in particular cells or bacteria.

42. An analysis method in accordance with one of claims 40 or 41, wherein the surface is functionalized in at least a part region.

## Revendications

1. Procédé de mélange pour le mélangeage intime d'au moins une petite quantité de liquide, dans lequel au moins une quantité de liquide (53) est amenée sur une zone d'interaction (23, 43, 83, 103) de la surface d'un corps solide, de préférence d'une plaquette, et au moins une onde sonore de surface est amenée en interaction avec ladite au moins une quantité de liquide (53), afin de la mélanger de manière intime, dans lequel
ladite au moins une quantité de liquide (53) est amenée sur une partie (23, 43, 103) de la surface sur laquelle se trouve un dispositif générateur (25, 45, 105) pour ladite au moins une onde sonore de surface, et/ou la quantité de liquide est amenée sur une zone dans laquelle se trouve un résonateur (86) pour une onde sonore de surface, qui est émise par un dispositif de génération d'ondes sonores de surface (85) éloigné de la zone du résonateur.

2. Procédé de mélange selon la revendication 1, dans lequel ladite au moins une quantité de liquide est introduite dans un renfoncement (23) dans la surface du corps solide.

3. Procédé de mélange selon l'une des revendications 1 ou 2, dans lequel ladite au moins une quantité de liquide (53, 73) est amenée sur une partie (43, 83, 103) de la surface qui comporte des propriétés de réticulation différentes de son environnement latéral de telle manière que le liquide demeure de préférence sur celle-ci.

4. Procédé de mélange selon l'une des revendications 1 à 3, dans lequel l'onde sonore de surface est pulsée.

5. Procédé de mélange selon la revendication 4, dans lequel la fréquence de pulsation de l'onde sonore de surface est choisie de telle manière qu'elle est en résonance avec une fréquence propre de la petite quantité de liquide (53) sur la zone d'interaction (23, 43, 83, 103).

6. Procédé de mélange selon l'une des revendications 1 à 5, dans lequel ladite au moins une onde sonore de surface est envoyée de manière décentrée sur la quantité de liquide.

7. Procédé de mélange selon l'une des revendications 1 à 6, dans lequel au moins deux ondes sonores de surface sont envoyées sur la quantité de liquide, dont le décalage de phase (ΔΦ) est différent d'un multiple de leur longueur d'onde (λ), de préférence égale à la demi-longueur d'onde.

8. Procédé de mélange selon l'une des revendications 1 à 7, dans lequel ladite au moins une onde sonore de surface est générée avec un transducteur interdigité (25, 45, 85, 105).

9. Procédé de mélange selon l'une des revendications 1 à 8, dans lequel ladite au moins une onde sonore de surface est générée avec un dispositif de génération d'ondes sonores de surface comportant un revêtement de préférence biocompatible.

10. Procédé de mélange selon la revendication 9, dans lequel on utilise un revêtement isolant du dispositif de génération d'onde sonore de surface.

11. Procédé de mélange selon l'une des revendications 9 ou 10, dans lequel on utilise un revêtement avec une forte constante diélectrique sur le dispositif de génération d'onde sonore de surface.

12. Procédé de mélange selon l'une des revendications 1 à 11, dans lequel la quantité de liquide se trouve dans une zone dans laquelle se trouvent des éléments perturbateurs pour la génération de tourbillonnements dans la quantité de liquide.

13. Procédé de mélange selon l'une des revendications 1 à 12, dans lequel plusieurs quantités de liquide sont amenées pour le mélange sur la zone d'interaction (23, 43, 83, 103).

14. Procédé de mélange selon l'une des revendications 1 à 12, dans lequel un matériau à dissoudre est amené sur la zone d'interaction (23, 43, 83, 103), est amené en contact avec un liquide, et est dissous par action d'une onde sonore de surface dans le liquide.

15. Procédé de mélange selon l'une des revendications 1 à 14, dans lequel ladite au moins une quantité de liquide (53) est additionnellement chauffée.

16. Dispositif de mélange pour le mélangeage intime d'au moins une petite quantité de liquide, pour la mise en oeuvre d'un procédé selon la revendication 1, comprenant au moins un dispositif de génération d'onde sonore de surface (25, 45, 85, 105) sur une surface d'un corps solide et une zone d'interaction (23, 43, 83, 103) qui est agencée, par rapport audit au moins un dispositif de génération d'onde sonore de surface de telle manière que lors du fonctionnement dudit au moins un dispositif de génération d'onde sonore de surface, elle est déformée par l'onde sonore de surface générée, et la zone d'interaction et ledit au moins un dispositif de génération d'onde sonore de surface se recouvrent au moins partiellement, et/ou il est prévu un résonateur (86) dans la zone d'interaction (83), lequel est conçu de telle manière qu'une onde sonore de surface, générée avec ledit au moins un dispositif de génération d'onde sonore de surface (85), est mise en résonance.

17. Dispositif de mélange selon la revendication 16, dans lequel la zone d'interaction est réalisée sous forme de renfoncement (23), et la profondeur de ce renfoncement est petite par rapport à la longueur d'onde d'une onde sonore de surface qui peut être générée avec le dispositif de génération d'onde sonore de surface (5, 206).

18. Dispositif de mélange selon la revendication 17, dans lequel la zone interaction (23) est réalisée sous la forme d'un renfoncement, et ledit au moins un dispositif de génération d'onde sonore de surface (25) est agencé au moins partiellement dans le renfoncement.

19. Dispositif de mélange selon l'une des revendications 17 ou 18, dans lequel le renfoncement comprend un renfoncement dans un revêtement sur un corps solide.

20. Dispositif de mélange selon la revendication 19, dans lequel le revêtement comprend du dioxyde de silicium.

21. Dispositif de mélange selon la revendication 16, dans lequel la zone d'interaction comprend une zone de séjour préférée (43, 83, 103) sur la surface du corps solide, dont les propriétés de réticulation différent de son environnement latéral de telle manière que la quantité de liquide demeure de préférence sur celle-ci.

22. Dispositif de mélange selon la revendication 21, dans lequel l'environnement de la zone de séjour préférée (43, 83, 103) est revêtu de silane.

23. Dispositif de mélange selon l'une des revendications 16 à 22, dans lequel la zone d'interaction et ledit au moins un dispositif de génération d'onde sonore de surface sont agencés l'un par rapport à l'autre de telle manière qu'une onde sonore de surface, qui est générée avec ledit au moins un dispositif de génération d'onde sonore de surface, agit de manière décentrée sur la zone d'interaction.

24. Dispositif de mélange selon l'une des revendications 16 à 23, comprenant au moins deux dispositifs de génération d'onde sonore de surface pour la génération d'ondes sonores de surface qui sont en décalage de phase l'une par rapport à l'autre dans la zone d'interaction (63).

25. Dispositif de mélange selon l'une des revendications 16 à 24, comprenant des éléments perturbateurs (104) dans la zone d'interaction (103).

26. Dispositif de mélange selon la revendication 25, dans lequel les éléments perturbateurs comprennent des zones décapées dans un environnement non décapé ou moins décapé, ou des zones non décapées ou moins décapées dans un environnement décapé.

27. Dispositif de mélange selon la revendication 25, dans lequel les éléments perturbateurs comprennent des zones qui sont revêtues de façon différente de leur environnement.

28. Dispositif de mélange selon la revendication 25, dans lequel les éléments perturbateurs sont formés par une délimitation irrégulière (104) de la zone d'interaction (103).

29. Dispositif de mélange selon l'une des revendications 16 à 28, comprenant un revêtement (33, 43) de préférence biocompatible sur le dispositif de génération d'onde sonore de surface (25, 45).

30. Dispositif de mélange selon la revendication 29, dans lequel le revêtement (33, 43) présente des propriétés de réticulation différentes de son environnement latéral de telle manière que le liquide y demeure de préférence.

31. Dispositif de mélange selon l'une des revendications 16 à 30, dans lequel ledit au moins un dispositif de génération d'onde sonore de surface (25, 45, 85, 105) comprend un transducteur interdigité.

32. Dispositif de mélange selon la revendication 31, comprenant un résonateur (86) qui comprend des revêtements métalliques agencés de manière périodique et dont la distance correspond à la distance des doigts du transducteur interdigité (85).

33. Dispositif de mélange selon l'une des revendications 16 à 32, comprenant un résonateur présentant un revêtement.

34. Dispositif de mélange selon l'une des revendications 16 à 33, comprenant un revêtement sur ledit au moins un dispositif de génération d'onde sonore de surface.

35. Dispositif de mélange selon l'une des revendications 33 et 34, dans lequel le revêtement est isolant.

36. Dispositif de mélange selon l'une des revendications 33 à 35, dans lequel le revêtement présente une constante diélectrique élevée.

37. Dispositif de mélange selon l'une des revendications 33 à 36, dans lequel le revêtement présente une épaisseur qui est inférieure ou sensiblement égale à la longueur d'onde d'une onde sonore de surface générée par ledit au moins un dispositif de génération d'onde sonore de surface.

38. Dispositif de mélange selon l'une des revendications 16 à 37, comprenant un dispositif de chauffage dans la zone de la zone d'interaction (23, 43, 83, 103).

39. Utilisation d'un dispositif selon l'une des revendications 16 à 38 à titre de trousse d'essai d'adhésion cellulaire.

40. Procédé d'analyse pour analyser la force de liaison d'objets sur des surfaces en utilisant un procédé selon l'une des revendications 1 à 15, dans lequel on emploie comme quantité de liquide une solution avec des objets microscopiquement petits et, pendant ou après l'interaction de l'onde sonore de surface avec la quantité de liquide, on étudie la quantité d'objets adhérents à la surface en fonction de l'écoulement généré dans la quantité de liquide par l'onde sonore de surface.

41. Procédé d'analyse selon la revendication 40, dans lequel on utilise une solution nutritive à titre de solution, et les objets sont des objets biologiques, en particulier des cellules ou des bactéries.

42. Procédé d'analyse selon l'une des revendications 40 ou 41, dans lequel la surface est fonctionnalisée, au moins dans une zone partielle.
